# EUROPEAN PATENT APPLICATION

(11) **EP 4 507 424 A1**
(43) Date of publication of application: **12.02.2025**
(21) Application number: 23778352.7
(22) Date of filing: 30.03.2023
(51) Int. Cl.: H04W 72/04

(54) **TRANSMISSION PROCESSING METHOD, NETWORK DEVICE, TERMINAL, APPARATUS AND STORAGE MEDIUM**

(30) Priority: 02.04.2022 CN 202210351079
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); LI, Yaomin, Beijing 100085 (CN); SU, Yuwan, Beijing 100085 (CN); CHENG, Fangchen, Beijing 100085 (CN)
(74) Representative: Studio Torta S.p.A.
(86) International application number: PCT/CN2023/084979
(87) International publication number: WO 2023/185987

(57) **Abstract**

Provided in the embodiments of the present disclosure are a transmission processing method, a network device, a terminal, an apparatus and a storage medium. The method is applied to the network device, and comprises: determining a transmission frequency domain of a network device according to frequency domain configuration information; and executing a transmission operation on the transmission frequency domain, wherein the transmission operation comprises one or more of the following: data transmission; information transmission; and signal transmission. By means of the transmission processing method, the network device, the terminal, the apparatus and the storage medium provided in the embodiments of the present disclosure, the network device can determine, according to frequency domain configuration information, a transmission frequency domain thereof, and execute a transmission operation on the determined transmission frequency domain, such that energy conservation of the network device can be realized by adjusting a transmission bandwidth.

## Description

### CROSS-REFERENCES TO RELATED APPLICATIONS

The present application claims priority to Chinese patent application No. 202210351079.7 filed on April 02, 2022, entitled "Transmission Processing Method, Network Device, Terminal, Apparatus and Storage Medium", which is hereby incorporated by reference in its entirety.

### FIELD

The present application relates to the field of radio communication, and in particular, to methods and apparatuses for transmission processing, a network device, a terminal, and a storage medium.

### BACKGROUND

Power consumption is one of the main indicators of operating costs for telecommunication operators. According to statistics from operators, the operating costs for power consumption in mobile networks account for approximately 23% of the total operating costs, and the vast majority of power consumption therein comes from radio access networks (RANs), especially from active antenna units (AAUs). The power consumption of a 5th generation mobile communication (5G) network is about 2-3 times that of a 4th generation mobile communication (4G) network. Research on power-saving technologies for 5G network power consumption is urgent.

In recent years, with the proposal of open RAN, an open, intelligent, virtualized, and fully interoperable network has attracted attention of operators. The traditional network power-saving technologies are mostly implemented by equipment manufacturers as a proprietary solution, which cannot be adopted for open RAN. For example, the physical layer equipment is provided by equipment manufacturer A, the high-level equipment is provided by equipment manufacturer B, and the core network device is provided by equipment manufacturer C. A non-standard proprietary implementation cannot be adopted for open RAN, which fails to save power for base stations.

### BRIEF SUMMARY

Embodiments of the present application provide methods and apparatuses for transmission processing, a network device, a terminal, and a storage medium, for reducing power consumption of a network device and saving power for the network device.

An embodiment of the present application provides a method for transmission processing, performed by a network device, including:
determining a transmission frequency domain for the network device based on frequency domain configuration information; and
performing a transmission operation in the transmission frequency domain, where the transmission operation includes one or more of the following:
   data transmission; information transmission; or signal transmission.

In an embodiment, after determining the transmission frequency domain for the network device, the method further includes:
transmitting first information based on a first mode, where the first information is used for indicating the transmission frequency domain;
the first mode includes one or more of the following:
   static or semi-static signaling transmission;
   dynamic signaling or signal transmission;
   media access control layer control element transmission; or
   timer-triggered transmission.

In an embodiment, determining the transmission frequency domain for the network device based on the frequency domain configuration information includes:
determining the transmission frequency domain for the network device based on the frequency domain configuration information on the network device side and/or the frequency domain configuration information on a terminal side.

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

In an embodiment, the second frequency domain includes one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; and
a frequency domain used for data transmission in case that a load of the network device meets a first condition;
the first condition includes one or more of the following:
the load of the network device is not higher than a first threshold;
a quantity and/or proportion of terminals attached to the network device is not higher than a second threshold;
quality of service of the load of the network device meets a third threshold; or
a bandwidth requirement for the network device is not higher than a fourth threshold.

In an embodiment, the third frequency domain includes one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition includes one or more of the following:
   the load of the network device is not lower than a fifth threshold;
   a quantity and/or proportion of terminals attached to the network device is not lower than a sixth threshold;
   quality of service of the load of the network device meets a seventh threshold; or
   a bandwidth requirement of the network device is not lower than an eighth threshold.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device;
the first parameter includes one or more of the following:
   a size of the load; a type of the load; a size of a cache; a type of the cache; a type of a service; or a quality of service indicator of the service.

An embodiment of the present application further provides a method for transmission processing, performed by a terminal, including:
determining a transmission frequency domain for a network device; and
performing a transmission operation between the terminal and the network device in the transmission frequency domain, where the transmission operation includes one or more of the following:
   data transmission; information transmission; or signal transmission.

In an embodiment, determining the transmission frequency domain for the network device includes:
receiving first information transmitted from the network device based on a first mode, where the first information is used for indicating the transmission frequency domain for the network device; and
determining the transmission frequency domain for the network device based on the first information;
the first mode includes one or more of the following:
   static or semi-static signaling transmission;
   dynamic signaling or signal transmission;
   media access control layer control element transmission; or
   timer-triggered transmission.

In an embodiment, determining the transmission frequency domain for the network device includes:
determining the transmission frequency domain for the network device based on frequency domain configuration information.

In an embodiment, determining the transmission frequency domain for the network device based on the frequency domain configuration information includes:
determining the transmission frequency domain for the network device based on the frequency domain configuration information on the network device side and/or the frequency domain configuration information on a terminal side.

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

In an embodiment, the second frequency domain includes one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition includes one or more of the following:
   the load of the network device is not higher than a first threshold;
   a quantity and/or proportion of terminals attached to the network device is not higher than a second threshold;
   quality of service of the load of the network device meets a third threshold; or
   a bandwidth requirement for the network device is not higher than a fourth threshold.

In an embodiment, the third frequency domain includes one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
where the second condition includes one or more of the following:
   the load of the network device is not lower than a fifth threshold;
   a quantity and/or proportion of terminals attached to the network device is not lower than a sixth threshold;
   quality of service of the load of the network device meets a seventh threshold; or
   a bandwidth requirement of the network device is not lower than an eighth threshold.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device;
the first parameter includes one or more of the following:
   a size of the load; a type of the load; a size of a cache; a type of the cache; a type of a service; or a quality of service indicator of the service.

An embodiment of the present application further provides a network device, including a memory, a transceiver, and a processor;
the memory is used for storing a computer program; the transceiver is used for transmitting and receiving data under control of the processor; the processor is used for reading the computer program in the memory and performing the following operations:
determining a transmission frequency domain for the network device based on frequency domain configuration information; and
performing a transmission operation in the transmission frequency domain, where the transmission operation includes one or more of the following:
   data transmission; information transmission; or signal transmission.

In an embodiment, after determining the transmission frequency domain for the network device, the operation further includes:
transmitting first information based on a first mode, where the first information is used for indicating the transmission frequency domain;
the first mode includes one or more of the following:
   static or semi-static signaling transmission;
   dynamic signaling or signal transmission;
   media access control layer control element transmission; or
   timer-triggered transmission.

In an embodiment, determining the transmission frequency domain for the network device based on the frequency domain configuration information includes:
determining the transmission frequency domain for the network device based on the frequency domain configuration information on the network device side and/or the frequency domain configuration information on a terminal side.

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

In an embodiment, the second frequency domain includes one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition includes one or more of the following:
   the load of the network device is not higher than a first threshold;
   a quantity and/or proportion of terminals attached to the network device is not higher than a second threshold;
   quality of service of the load of the network device meets a third threshold; or
   a bandwidth requirement for the network device is not higher than a fourth threshold.

In an embodiment, the third frequency domain includes one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition includes one or more of the following:
   the load of the network device is not lower than a fifth threshold;
   a quantity and/or proportion of terminals attached to the network device is not lower than a sixth threshold;
   quality of service of the load of the network device meets a seventh threshold; or
   a bandwidth requirement of the network device is not lower than an eighth threshold.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device;
the first parameter includes one or more of the following:
   a size of the load; a type of the load; a size of a cache; a type of the cache; a type of a service; or a quality of service indicator of the service.

An embodiment of the present application further provides a terminal, including a memory, a transceiver, and a processor;
the memory is used for storing a computer program; the transceiver is used for transmitting and receiving data under control of the processor; the processor is used for reading the computer program in the memory and performing the following operations:
determining a transmission frequency domain for a network device; and
performing a transmission operation between the terminal and the network device in the transmission frequency domain, where the transmission operation includes one or more of the following:
   data transmission; information transmission; or signal transmission.

In an embodiment, determining the transmission frequency domain for the network device includes:
receiving first information transmitted from the network device based on a first mode, where the first information is used for indicating the transmission frequency domain for the network device; and
determining the transmission frequency domain for the network device based on the first information;
the first mode includes one or more of the following:
   static or semi-static signaling transmission;
   dynamic signaling or signal transmission;
   media access control layer control element transmission; or
   timer-triggered transmission.

In an embodiment, determining the transmission frequency domain for the network device includes:
determining the transmission frequency domain for the network device based on frequency domain configuration information.

In an embodiment, determining the transmission frequency domain for the network device based on the frequency domain configuration information includes:
determining the transmission frequency domain for the network device based on the frequency domain configuration information on the network device side and/or the frequency domain configuration information on a terminal side.

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

In an embodiment, the second frequency domain includes one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition includes one or more of the following:
   the load of the network device is not higher than a first threshold;
   a quantity and/or proportion of terminals attached to the network device is not higher than a second threshold;
   quality of service of the load of the network device meets a third threshold; or
   a bandwidth requirement for the network device is not higher than a fourth threshold.

In an embodiment, the third frequency domain includes one or more of the following:
a frequency domain used for data transmission;
a frequency domain used for UE-specific information transmission;
a frequency domain used for information transmission for a UE-group; or
a frequency domain used for data transmission in case that the load of the network device meets a second condition; the second condition includes one or more of the following:
   the load of the network device is not lower than a fifth threshold;
   a quantity and/or proportion of terminals attached to the network device is not lower than a sixth threshold;
   quality of service of the load of the network device meets a seventh threshold; or
   a bandwidth requirement of the network device is not lower than an eighth threshold.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device; the first parameter includes one or more of the following:
a size of the load; a type of the load; a size of a cache; a type of the cache; a type of a service; or a quality of service indicator of the service.

An embodiment of the present application further provides an apparatus for transmission processing for use in a network device, including:
a first determining unit, used for determining a transmission frequency domain for the network device based on frequency domain configuration information; and
a first transmitting unit, used for performing a transmission operation in the transmission frequency domain, where the transmission operation includes one or more of the following:
   data transmission; information transmission; or signal transmission.

An embodiment of the present application further provides an apparatus for transmission processing for use in a terminal, including:
a second determining unit, used for determining a transmission frequency domain for a network device; and
a second transmitting unit, used for performing a transmission operation between the terminal and the network device in the transmission frequency domain, where the transmission operation includes one or more of the following:
data transmission; information transmission; or signal transmission.

An embodiment of the present application further provides a computer-readable storage medium storing a computer program, where the computer program causes a computer to perform steps of the above-mentioned method performed by the network device, or perform steps of the above-mentioned method performed by the terminal.

An embodiment of the present application further provides a communication device storing a computer program, where the computer program causes the communication device to perform steps of the above-mentioned method performed by the network device, or perform steps of the above-mentioned method performed by the terminal.

An embodiment of the present application further provides a processor-readable storage medium storing a computer program, where the computer program causes a processor to perform steps of the above-mentioned method performed by the network device, or perform steps of the above-mentioned method performed by the terminal.

An embodiment of the present application further provides a chip product storing a computer program, where the computer program causes the chip product to perform steps of the above-mentioned method performed by the network device, or perform steps of the above-mentioned method performed by the terminal.

In the methods and apparatuses for transmission processing, the network device, the terminal, and the storage medium provided in the embodiment of the present application, the network device may determine the transmission frequency domain based on the frequency domain configuration information and perform the transmission operation in the determined transmission frequency domain, which saves power for the network device by adjusting the transmission bandwidth.

### BRIEF DESCRIPTION OF THE DRAWINGS

To illustrate the solutions disclosed in the embodiments of the present application more clearly, the drawings used in the description of the embodiments are briefly described below. The drawings in the following description are only some embodiments of the present application, and other drawings may be obtained based on these drawings without any creative effort for those skilled in the art.
FIG. 1 is a first schematic flowchart of a method for transmission processing according to an embodiment of the present application;
FIG. 2 is a schematic diagram of a bandwidth relationship between different frequency domains according to an embodiment of the present application;
FIG. 3 is a second schematic flowchart of a method for transmission processing according to an embodiment of the present application;
FIG. 4 is a schematic structural diagram of a network device according to an embodiment of the present application;
FIG. 5 is a schematic structural diagram of a terminal according to an embodiment of the present application;
FIG. 6 is a first schematic structural diagram of an apparatus for transmission processing according to an embodiment of the present application; and
FIG. 7 is a second schematic structural diagram of an apparatus for transmission processing according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

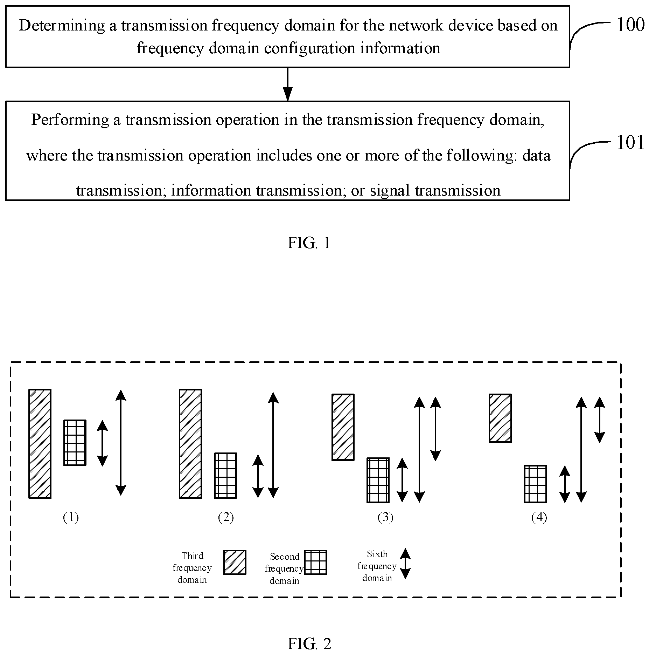

FIG. 1 is a first schematic flowchart of a method for transmission processing according to an embodiment of the present application. The method may be performed by a network device (such as a base station). As shown in FIG. 1, the method includes the following steps.

Step 100: determining a transmission frequency domain for the network device based on frequency domain configuration information.

To save power for the network device, the embodiment of the present application provides a frequency domain based network power saving scheme. By configuring a transmission frequency domain for the network device, the network device may adjust its transmission bandwidth as needed, which effectively reduces power consumption.

The transmission frequency domain for the network device refers to a frequency domain actually used for transmission by the network device.

In an embodiment, the frequency domain described in various embodiments of the present application may be a segment of resource in the frequency domain. For example, the frequency domain may include at least one of a cell, a carrier, or a bandwidth part (BWP).

In an embodiment, the frequency domain configuration information may refer to configuration information for a frequency domain resource, such as configuration information for a frequency domain resource of a cell, or configuration information for a frequency domain resource of a carrier, or configuration information for a frequency domain resource of a BWP, etc.

In an embodiment, the frequency domain configuration information may be used for indicating a frequency domain resource of a configured frequency domain, such as indicating a frequency domain resource of a configured cell, indicating a frequency domain resource of a configured carrier, or indicating a frequency domain resource of a configured BWP, etc.

In an embodiment, the frequency domain resource may include a resource block (RB) or a resource element (RE), etc.

In an embodiment, the frequency domain configuration information may be configured by a core network for the network device, or transmitted from a terminal to the network device, or pre-configured in the network device, or any combination of the three modes.

In an embodiment, the frequency domain configuration information may include initially configured frequency domain configuration information or dynamically updated frequency domain configuration information.

In an embodiment, the frequency domain configuration information may be configured by the core network or the terminal based on one or more signalings such as a static or semi-static signaling, or a dynamic signaling, etc. to the network device. For example, the static or semi-static signaling may include a system information block (SIB) signaling, a radio resource control (RRC) signaling, a broadcast signaling, or other static or semi-static signalings, etc; the dynamic signaling may be a control signaling or other dynamic signalings, etc.

Step 101: performing a transmission operation in the transmission frequency domain, where the transmission operation includes one or more of the following:
data transmission; information transmission; or signal transmission.

After determining the transmission frequency domain, the network device may perform the transmission operation in the frequency domain, such as one or more of data transmission, information transmission, or signal transmission. The transmission may be transmitting and/or receiving, and the object of transmission may be the terminal, the core network, or other network devices, which is not limited herein.

In an embodiment, the data transmission may include one or more of the following:
(1) transmission of a physical downlink shared channel (PDSCH);
(2) transmission of a physical downlink control channel (PDCCH);
(3) transmission of a physical uplink shared channel (PUSCH); or
(4) transmission of a physical uplink control channel (PUCCH).

In an embodiment, the information transmission may include one or more of the following.

### (1) Transmission of channel state information (CSI) measurement value information.

In an embodiment, the CSI measurement value information may include one or more of a channel quality indicator (CQI), a modulation and coding scheme (MCS), a precoder matrix indicator (PMI), a rank indicator (RI), or a codebook.

### (2) Transmission of radio resource management (RRM) measurement value information.

In an embodiment, the RRM measurement value information may include one or more of reference signal receiving power (RSRP), reference signal receiving quality (RSRQ), a received signal strength indication (RSSI), or a signal to interference plus noise ratio (SINR).

### (3) Transmission of beam measurement value information.

In an embodiment, the beam measurement value information may include one or more of a quantity of beams, beam quality, beam coverage, or a beam angle.

In an embodiment, the signal transmission may include one or more of the following.

### (1) Transmission of a reference signal.

In an embodiment, the reference signal may include one or more of a channel state measurement reference signal, an RRM measurement reference signal, a beam measurement reference signal, a time-frequency tracking reference signal, a positioning reference signal, a phase tracking reference signal, or a channel sounding reference signal.

### (2) Transmission of a synchronization signal.

In an embodiment, the synchronization signal may include one or more of a fine synchronization signal or a coarse synchronization signal.

### (3) Transmission of a broadcast signal.

In an embodiment, the broadcast signal may include one or more of a cell-specific broadcast signal, a cell-group broadcast signal, a core network broadcast signal, or a UE-group broadcast signal.

### (4) Transmission of a physical random access channel (PRACH) signal.

In an embodiment, the frequency domain described in various embodiments of the present application may include at least one state among an activated state, an inactive state, and a dormant state.

In an embodiment, one or more of data transmission, information transmission, or signal transmission may be performed in the activated frequency domain.

In an embodiment, one or more of the following may be included in the inactive frequency domain: no data transmission, no information transmission, or no signal transmission.

In an embodiment, no data transmission includes one or more of no transmission of PDCCH, no transmission of PDSCH, no transmission of PUCCH, no transmission of PUSCH, or no transmission of PRACH.

In an embodiment, no information transmission includes one or more of no transmission of CSI measurement value information, no transmission of RRM measurement value information, or no transmission of beam measurement value information.

In an embodiment, no signal transmission includes one or more of no transmission of reference signal, no transmission of synchronization signal, or no transmission of broadcast signal.

In an embodiment, in the dormant frequency domain, similar to the inactive frequency domain, one or more of the following may be included: no data transmission, no information transmission, or no signal transmission. A difference between the dormant frequency domain and the inactive frequency domain is that transmission of channel state measurement value, or transmission of channel state reference signal, or transmission of channel sounding signal reference signal may be maintained in the dormant frequency domain.

In the method for transmission processing provided in the embodiments of the present application, the network device may determine the transmission frequency domain based on the frequency domain configuration information and perform the transmission operation in the determined transmission frequency domain, which saves power for the network device by adjusting the transmission bandwidth.

In an embodiment, after determining the transmission frequency domain for the network device, the method further includes:
transmitting first information based on a first mode, where the first information is used for indicating the transmission frequency domain;
the first mode includes one or more of the following:
   static or semi-static signaling transmission;
   dynamic signaling or signal transmission;
   media access control layer control element transmission; or
   timer-triggered transmission.

After determining the transmission frequency domain (initial or updated transmission frequency domain), the network device may transmit the first information, where the first information may be used for indicating the transmission frequency domain determined by the network device.

In an embodiment, the first information may indicate the transmission frequency domain determined by the network device in a direct manner or an indirect manner.

In an embodiment, the first information may include information of the transmission frequency domain determined by the network device or an identifier of the information of the transmission frequency domain determined by the network device.

In an embodiment, the information of the transmission frequency domain determined by the network device may include one or more of a quantity of transmission frequency domains, a serial number of transmission frequency domain, or configuration of a frequency domain resource in the transmission frequency domain.

In an embodiment, the configuration of the frequency domain resource in the transmission frequency domain may include one or more of the following:
(1) a position distribution of RBs and/or REs of the frequency domain resource;
(2) a starting position of the frequency domain resource;
(3) an ending position of the frequency domain resource; or
(4) a quantity of RBs and/or REs of the frequency domain resource.

In an embodiment, the identifier of the information of the transmission frequency domain determined by the network device may include one or more of an identifier of the quantity of transmission frequency domains, an identifier of the serial number of transmission frequency domain, or an identifier of the configuration of the frequency domain resource in the transmission frequency domain.

In an embodiment, the identifier of the configuration of the frequency domain resource in the transmission frequency domain may include one or more of the following:
(1) an identifier of the position distribution of RBs and/or REs of the frequency domain resource;
(2) an identifier of the starting position of the frequency domain resource;
(3) an identifier of the ending position of the frequency domain resource; or
(4) an identifier of the quantity of RBs and/or REs of the frequency domain resource.

In an embodiment, the network device may transmit the first information through one or more of the following modes: static or semi-static signaling transmission, dynamic signaling or signal transmission, media access control layer control element (MAC-CE) transmission, or timer-triggered transmission, etc.

In an embodiment, the static or semi-static signaling may include one or more of a SIB signaling, an RRC signaling, or a broadcast signaling.

In an embodiment, the dynamic signaling or signal may include one or more of a control signaling or a node reference signal.

In an embodiment, the control signaling may include an uplink or a downlink control signaling.

In an embodiment, the node reference signal may include one or more of a node discovery signal, a node channel state reference signal, a node synchronization signal, a node time-frequency tracking reference signal, or a node positioning signal, etc.

In an embodiment, a node in the node reference signal may be the network device and/or the terminal.

In an embodiment, determining the transmission frequency domain for the network device based on the frequency domain configuration information includes:
determining the transmission frequency domain for the network device based on the frequency domain configuration information on the network device side and/or the frequency domain configuration information on a terminal side.

The frequency domain configuration information may include frequency domain configuration information on the network device side and/or frequency domain configuration information on the terminal side. The network device may determine the transmission frequency domain for the network device based on the frequency domain configuration information on the network device side and/or the frequency domain configuration information on the terminal side.

In an embodiment, the frequency domain configuration information on the terminal side may include frequency domain configuration information configured for a single terminal and/or frequency domain configuration information configured for a (UE-group).

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

The first frequency domain may be one or more, and the network device may determine the transmission frequency domain for the network device based on the first frequency domain indicated in the frequency domain configuration information on the network device side and/or the frequency domain configuration information on the terminal side. For example, the first frequency domain may be taken as the transmission frequency domain for the network device.

In an embodiment, the first frequency domain may include a fixed bandwidth frequency domain and/or a variable bandwidth frequency domain.

In an embodiment, the first frequency domain may include one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

The second frequency domain may be one or more, the third frequency domain may be one or more, and the network device may determine the transmission frequency domain for the network device based on the second frequency domain and/or the third frequency domain.

In an embodiment, the second frequency domain may include a fixed bandwidth frequency domain and/or a variable bandwidth frequency domain.

In an embodiment, the third frequency domain may include a fixed bandwidth frequency domain and/or a variable bandwidth frequency domain.

For example, the network device may determine the transmission frequency domain for the network device based on the second frequency domain indicated in the frequency domain configuration information on the network device side.

For example, the network device may determine the transmission frequency domain for the network device based on the third frequency domain indicated in the frequency domain configuration information on the network device side.

For example, the network device may determine the transmission frequency domain for the network device based on the second frequency domain and the third frequency domain indicated in the frequency domain configuration information on the network device side.

For example, the second frequency domain and the third frequency domain may also be frequency domains indicated in the frequency domain configuration information on the terminal side, or one of the second frequency domain and the third frequency domain may be a frequency domain indicated in the frequency domain configuration information on the terminal side, etc., which is not limited herein.

In an embodiment, determining the transmission frequency domain for the network device based on the second frequency domain and/or the third frequency domain may include any of the following.

(1) Determining the transmission frequency domain for the network device based on a maximum frequency domain of the second frequency domain and/or the third frequency domain.

For example, the maximum frequency domain among multiple second frequency domains (i.e., a frequency domain with maximum bandwidth) may be determined as the transmission frequency domain for the network device.

For example, the maximum frequency domain among multiple third frequency domains may be determined as the transmission frequency domain for the network device.

For example, the maximum frequency domain in a frequency domain set composed of the second frequency domain and the third frequency domain may be determined as the transmission frequency domain for the network device.

For example, a bandwidth of the maximum frequency domain in the second frequency domains and a bandwidth of the maximum frequency domain in the third frequency domains may be added to obtain the transmission frequency domain for the network device.

(2) Determining the transmission frequency domain for the network device based on a minimum frequency domain in the second frequency domain and/or the third frequency domain.

For example, the minimum frequency domain (i.e., the frequency domain with minimum bandwidth) among multiple second frequency domains may be determined as the transmission frequency domain for the network device.

For example, the minimum frequency domain among multiple third frequency domains may be determined as the transmission frequency domain for the network device.

For example, the minimum frequency domain in a frequency domain set composed of the second frequency domain and the third frequency domain may be determined as the transmission frequency domain for the network device.

For example, a bandwidth of the minimum frequency domain in the second frequency domains and a bandwidth of the minimum frequency domain in the third frequency domains may be added to obtain the transmission frequency domain for the network device.

(3) Determining the starting and ending positions of the transmission frequency domain for the network device based on RB serial numbers in the second frequency domain and/or the third frequency domain.

In an embodiment, the starting position of the transmission frequency domain for the network device may be determined based on an RB with lowest serial number in the second frequency domain and/or the third frequency domain. For example, the RB with lowest serial number in the second frequency domain may be determined as the starting position of the transmission frequency domain for the network device; for example, the RB with lowest serial number in the third frequency domain may be determined as the starting position of the transmission frequency domain for the network device; for example, the RB with lowest serial number in a frequency domain set composed of the second frequency domain and the third frequency domain may be determined as the starting position of the transmission frequency domain for the network device. In this case, the ending position of the transmission frequency domain for the network device may be set as needed, which is not limited herein.

In an embodiment, the starting position of the transmission frequency domain for the network device may be determined based on an RB with highest serial number in the second frequency domain and/or the third frequency domain. For example, the RB with highest serial number in the second frequency domain may be determined as the starting position of the transmission frequency domain for the network device; for example, the RB with highest serial number in the third frequency domain may be determined as the starting position of the transmission frequency domain for the network device; for example, the RB with highest serial number in a frequency domain set composed of the second frequency domain and the third frequency domain may be determined as the starting position of the transmission frequency domain for the network device. In this case, the ending position of the transmission frequency domain for the network device may be set as needed, which is not limited herein.

In an embodiment, the ending position of the transmission frequency domain for the network device may be determined based on an RB with lowest serial number in the second frequency domain and/or the third frequency domain. For example, the RB with lowest serial number in the second frequency domain may be determined as the ending position of the transmission frequency domain for the network device; for example, the RB with lowest serial number in the third frequency domain may be determined as the ending position of the transmission frequency domain for the network device; for example, the RB with lowest serial number in a frequency domain set composed of the second frequency domain and the third frequency domain may be determined as the ending position of the transmission frequency domain for the network device. In this case, the starting position of the transmission frequency domain for the network device may be set as needed, which is not limited herein.

In an embodiment, the ending position of the transmission frequency domain for the network device may be determined based on an RB with highest serial number in the second frequency domain and/or the third frequency domain. For example, the RB with highest serial number in the second frequency domain may be determined as the ending position of the transmission frequency domain for the network device; for example, the RB with highest serial number in the third frequency domain may be determined as the ending position of the transmission frequency domain for the network device; for example, the RB with highest serial number in a frequency domain set composed of the second frequency domain and the third frequency domain may be determined as the ending position of the transmission frequency domain for the network device. In this case, the starting position of the transmission frequency domain for the network device may be set as needed, which is not limited herein.

In an embodiment, the starting position of the transmission frequency domain for the network device may be determined based on the RB with lowest serial number in the second frequency domain and/or the third frequency domain, and the ending position of the transmission frequency domain for the network device may be determined based on the RB with highest serial number in the second frequency domain and/or the third frequency domain. The mode is a combination of the mode for determining the starting position of the transmission frequency domain for the network device and the mode for determining the ending position of the transmission frequency domain for the network device, which is not repeated herein.

In an embodiment, the starting position of the transmission frequency domain for the network device may be determined based on the RB with highest serial number in the second frequency domain and/or the third frequency domain, and the ending position of the transmission frequency domain for the network device may be determined based on the RB with lowest serial number in the second frequency domain and/or the third frequency domain. The mode is a combination of the mode for determining the starting position of the transmission frequency domain for the network device and the mode for determining the ending position of the transmission frequency domain for the network device, which is not repeated herein.

In an embodiment, the second frequency domain may include one or more of the following.
(1) A frequency domain used for information transmission and/or signal transmission for the network device in a power-saving state. For example, the network device may be preset with a power-saving state or power-saving mode, in which the network device uses the second frequency domain for information transmission and/or signal transmission.
(2) A minimum frequency domain used for transmission. For example, a frequency domain with a smallest bandwidth among the frequency domains used for transmission.
(3) A frequency domain used for information transmission at a cell level; that is, a frequency domain used by the network device for information transmission at the cell level.
(4) A frequency domain used for information transmission for a UE-group; that is, a frequency domain used by the network device for information transmission for the UE-group.
(5) A frequency domain used for data transmission in case that a load of the network device meets a first condition; that is, a frequency domain used by the network device for data transmission under the first condition.

In an embodiment, the first condition may include one or more of the following:
the load of the network device is not higher than a first threshold;
a quantity and/or proportion of terminals attached to the network device is not higher than a second threshold;
quality of service (QoS) of the load of the network device meets a third threshold; or
a bandwidth requirement for the network device is not higher than a fourth threshold.

In an embodiment, the QoS of the load of the network device meets the third threshold may include one or more of the following: a latency of the network device is not lower than a first latency threshold, a transmission rate of the network device is not higher than a first rate threshold, or reliability of the network device is not higher than a first reliability threshold.

The values of the above thresholds may be flexibly set as needed, which is not limited herein.

In an embodiment, the third frequency domain includes one or more of the following:
(1) a frequency domain used for data transmission; that is, a frequency domain used by the network device for data transmission;
(2) a frequency domain used for UE-specific information transmission; that is, a frequency domain used by the network device for UE-specific information transmission;
(3) a frequency domain used for information transmission for a UE-group; that is, a frequency domain used by the network device for information transmission for the UE-group;
   or
(4) a frequency domain used for data transmission in case that the load of the network device meets a second condition; that is, a frequency domain used by the network device for data transmission under the second condition.

In an embodiment, the second condition may include one or more of the following:
the load of the network device is not lower than a fifth threshold;
a quantity and/or proportion of terminals attached to the network device is not lower than a sixth threshold;
QoS of the load of the network device meets a seventh threshold; or
a bandwidth requirement of the network device is not lower than an eighth threshold.

In an embodiment, the QoS of the load of the network device meets the seventh threshold may include one or more of the following: a latency of the network device is not higher than a second latency threshold, a transmission rate of the network device is not lower than a second rate threshold, or reliability of the network device is not lower than second reliability threshold.

The values of the above thresholds may be flexibly set as needed, which is not limited herein.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

The fourth frequency domain may be one or more, and the fifth frequency domain may be one or more.

In an embodiment, the fourth frequency domain may be the frequency domain indicated in the frequency domain configuration information on the network device side. For example, the fourth frequency domain may be one or more of the first frequency domain, the second frequency domain, the third frequency domain, or other frequency domains indicated in the frequency domain configuration information on the network device side.

In an embodiment, the fourth frequency domain may be the frequency domain determined based on the frequency domain indicated in the frequency domain configuration information on the network device side. For example, the fourth frequency domain may be the frequency domain determined based on one or more of the first frequency domain, the second frequency domain, the third frequency domain, or other frequency domains indicated in the frequency domain configuration information on the network device side.

In an embodiment, the fifth frequency domain may be the frequency domain indicated in the frequency domain configuration information on the terminal side. For example, the fifth frequency domain may be one or more of the first frequency domain, the second frequency domain, the third frequency domain, or other frequency domains indicated in the frequency domain configuration information on the terminal side.

In an embodiment, the fifth frequency domain may be the frequency domain determined based on the frequency domain indicated in the frequency domain configuration information on the terminal side. For example, the fifth frequency domain may be the frequency domain determined based on one or more of the first frequency domain, the second frequency domain, the third frequency domain, or other frequency domains indicated in the frequency domain configuration information on the terminal side.

For example, the network device may determine the transmission frequency domain for the network device based solely on the fourth frequency domain (such as the maximum frequency domain, the minimum frequency domain, and the RB serial number, etc. in the fourth frequency domain).

For example, the network device may determine the transmission frequency domain for the network device based solely on the fifth frequency domain (such as the maximum frequency domain, the minimum frequency domain, and the RB serial number, etc. in the fifth frequency domain).

For example, the network device may determine the transmission frequency domain for the network device based on the fourth frequency domain and the fifth frequency domain (such as the maximum frequency domain, the minimum frequency domain, the RB serial number, etc. in the fourth frequency domain and/or the fifth frequency domain).

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

The network device may determine the bandwidth of the transmission frequency domain for the network device based on the sum of the bandwidths of the fourth frequency domain and the fifth frequency domain, determine a center frequency point position, the starting position, the ending position, etc. of the transmission frequency domain for the network device through any other means, and determine the transmission frequency domain for the network device.

In an embodiment, the starting position of the fourth frequency domain or the fifth frequency domain may be the starting position of the transmission frequency domain for the network device; or the ending position of the fourth frequency domain or the fifth frequency domain may be the ending position of the transmission frequency domain for the network device; or the center frequency point position of the fourth frequency domain or the fifth frequency domain may be the center frequency point position of the transmission frequency domain for the network device.

In an embodiment, the network device may use the sum of the bandwidths of the fourth frequency domain and the fifth frequency domain as the bandwidth of the transmission frequency domain for the network device.

In an embodiment, the network device may subtract twice the bandwidth of an intersection between the fourth frequency domain and the fifth frequency domain from the sum of the bandwidths of the fourth frequency domain and the fifth frequency domain as the bandwidth of the transmission frequency domain for the network device.

In an embodiment, the network device may add the sum of the bandwidths of the fourth frequency domain and the fifth frequency domain to the bandwidth of an interval between the fourth frequency domain and the fifth frequency domain as the bandwidth of the transmission frequency domain for the network device.

It should be noted that the modes for determining the transmission frequency domain for the network device listed in various embodiments of the present application are only exemplary and not exhaustive, and do not constitute limitations on the methods for determining the transmission frequency domain for the network device in various embodiments of the present application.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device.

In case of determining the transmission frequency domain, the network device may determine, in conjunction with the first parameter used for representing the load of the network device, whether to increase or decrease the transmission bandwidth. The transmission frequency domain may be determined using the methods adopted in the above embodiments based on the frequency domain configuration information on the network device side and/or the frequency domain configuration information on the terminal side.

In an embodiment, the first parameter may include one or more of the following: a size of the load; a type of the load; a size of a cache; a type of the cache; a type of a service; or a QoS indicator of the service.

For example, the network device may decrease the transmission bandwidth in case that the first parameter meets some conditions (such as a small load, a load type not requiring a large transmission bandwidth, etc.). In case of determining the transmission frequency domain, the network device may prioritize selecting the frequency domain with lower bandwidth as the transmission frequency domain.

For example, the network device may increase the transmission bandwidth in case that the first parameter meets some conditions (such as a high load, load type requiring large transmission bandwidth, etc.). In case of determining the transmission frequency domain, the network device may prioritize selecting the frequency domain with larger bandwidth as the transmission frequency domain.

By dynamically adjusting the transmission bandwidth based on different load conditions, the network device may save power consumption and normal network service demands may be ensured.

The following embodiments illustrate the methods provided in the above embodiments of the present application through specific application scenarios.

Embodiment 1: a network device transmits based on a frequency domain on the network device side.

### 1. Configuring a frequency domain on the network device side.

A first frequency domain may be configured for the network device by a network including at least one of a network device node, a core network, or a terminal node.

The first frequency domain may be configured for the network device by the network based on at least one of the following signalings: a static or semi-static signaling (such as an RRC signaling, a SIB signaling, etc.) and a dynamic signaling, etc.

The first frequency domain may be a frequency domain on the network device side. The first frequency domain is a segment of resource in the frequency domain. In the first frequency domain, the network device may transmit at least one of data, information, or a signal.

The transmission of at least one of the data, the information, or the signal includes: transmission of PDSCH, transmission of PDCCH, transmission of PUSCH, transmission of PRACH, transmission of PUCCH, transmission of CSI measurement value, transmission of RRM measurement value, transmission of beam measurement value, transmission of channel state information reference signal (CSI-RS), transmission of synchronization signal block (SSB), transmission of sounding reference signal (SRS), etc.

In case that the first parameter meets the condition of decreasing transmission bandwidth, the transmission bandwidth of the network device may be decreased, which saves power for the network device. In case that the first parameter meets the condition of increasing transmission bandwidth, the transmission bandwidth of the network device may be increased, which improves transmission efficiency and enhances user experience. The first parameter includes one or more of the following: the size of the load; the type of the load; the size of a cache; the type of the cache; the type of a service; or the QoS indicator of the service.

For the network device, the transmission of PDSCH may include transmitting PDSCH; the transmission of PDCCH may include transmitting PDCCH; the transmission of PUSCH may include receiving PUSCH; the transmission of PRACH may include receiving and transmitting RACH information; the transmission of PUCCH may include receiving PUCCH; the transmission of the CSI measurement value may include receiving at least one of CQI, MCS, PMI, RI, or codebook; the transmission of the RRM measurement value may include receiving at least one of RSRP, RSRQ, RSSI, or SINR; the transmission of the beam measurement value may include receiving at least one of a quantity of beams, beam quality, a beam coverage, or a beam angle.

Configuring the first frequency domain includes configuring at least one first frequency domain. The first frequency domain includes at least one state among an activated state, an inactive state, and a dormant state.

### 2. Transmitting frequency domain change information of the network device.

In case that the transmission frequency domain for the network device changes (or updates), the first information (i.e., the frequency domain change information of the network device in this embodiment) may be transmitted to notify the changed transmission frequency domain for the network device.

Transmitting frequency domain change information of the network device includes at least one of the following modes: static or semi-static signaling transmission, dynamic signaling or signal transmission, MAC-CE transmission, or timer-triggered transmission, etc.

The dynamic signaling or signal transmission includes at least one of the following: a control signaling (including an uplink or a downlink control signaling) or a node reference signal.

The node reference signal includes at least one of the following: a node discovery signal, a node channel state reference signal, a node synchronization signal, a node time-frequency tracking reference signal, or a node positioning signal, etc.

The static or semi-static signaling transmission includes at least one of the following: an SIB signaling, an RRC signaling, or a broadcast signaling, etc.

The frequency domain change of the network device includes at least one of the following triggering conditions. Based on different triggering conditions, the network device is configured with different frequency domains to save power on the network device side.

The triggering condition includes at least one of the following: a service change, a change in a proportion or quantity of attached terminals, a frequency domain change triggered by an attached terminal on the network device side, or a change in transmission type, etc.

The service change includes at least one of a change in service QoS requirement, a change in service type, a change in transmission rate, a change in latency, or a change in reliability, etc. The service change includes increasing or decreasing, such as a transmission rate increases or decreases, a latency increases or decreases, or reliability increases or decreases.

The change in the proportion or quantity of attached terminals includes: the attached terminal is a terminal connected to the network or a terminal provided with service by the network.

The change in the transmission type includes at least one change between the following transmission types: the transmission type is data transmission; the transmission type is information and/or signal transmission; the transmission type is cell-specific information transmission; the transmission type is UE-groupinformation transmission; the transmission type is UE-specific information transmission. For example, changing from data transmission to information or signal transmission; changing from UE-specific information transmission to data transmission; changing from UE-specific information transmission to cell-specific information transmission, and so on. All the above transmission type changes may trigger frequency domain changes in the network device.

The transmission of frequency domain change information includes at least one of the following: information notifying a frequency domain change or an identifier of the information notifying the frequency domain change.

The frequency domain change information includes at least one of the following:
a quantity of frequency domains after a change;
a serial number of frequency domains after a change, for example, a label; or
configuration of a frequency domain resource of frequency domain after a change.

The configuration of the frequency domain resource includes at least one of the following:
a position distribution of RBs and REs of the frequency domain resource;
a starting position of the frequency domain resource;
an ending position of the frequency domain resource; or
a quantity of RBs and/or REs of the frequency domain resource.

The identifier of the frequency domain change information includes at least one of the following:
an identifier of the quantity of frequency domains after the change;
an identifier of the serial number of frequency domains after the change, for example, a label; or
an identifier of the configuration of the frequency domain resource of frequency domain after the change.

The identifier of the configuration of the frequency domain resource includes at least one of the following:
an identifier of the position distribution of RBs and REs of the frequency domain resource;
an identifier of the starting position of the frequency domain resource;
an identifier of the ending position of the frequency domain resource; or
an identifier of the quantity of RBs and/or REs of the frequency domain resource.

A correspondence between the identifier of the frequency domain change information and the frequency domain change information may be pre-configured to the terminal through at least one of the following modes: core network configuration, static/semi-static signaling configuration, or dynamic signaling/signal configuration.

The dynamic signaling/signal may include at least one of physical layer control information, a reference signal, or a broadcast signal.

### 3. Transmitting based on the configured frequency domain.

The network device transmits the relevant data, information, and/or signal based on the configured frequency domain.

Embodiment 2: a network device transmits based on power-saving frequency domain and non-power-saving frequency domain.

### 1. Configuring a frequency domain on the network device side.

A second frequency domain (i.e., the power-saving frequency domain in this embodiment) may be configured for the network device by a network including at least one of a network device node, a core network, or a terminal node.

The second frequency domain may be configured for the network device by the network based on at least one of the following signalings: a static or semi-static signaling (such as an RRC signaling or a SIB signaling, etc.) or a dynamic signaling, etc.

The second frequency domain may be a frequency domain on the network device side. The second frequency domain is a segment of resource in the frequency domain. The second frequency domain may be at least one in the first frequency domain.

A difference between the second frequency domain and the first frequency domain lies in:
the second frequency domain may include at least one of the following: a frequency domain used for information and/or signal transmission for the network device in the power-saving state or mode; a minimum frequency domain used for transmission; a frequency domain used for information transmission at a cell level; a frequency domain used for transmitting UE-group information; or a frequency domain for data transmission in case that a load of the network device meets a first condition. The transmission bandwidth of the network device may be decreased by using the second frequency domain, which saves power for the network device.

The first condition may be at least one of the following:
the load of the network device is not higher than a first threshold;
a quantity and/or proportion of terminals attached to the network device is not higher than a second threshold;
QoS of the load of the network device meets a third threshold; or
a bandwidth requirement of the network device is not higher than a fourth threshold.

The QoS of the load of the network device meets the third threshold includes at least one of the following: latency is not lower than a first latency threshold; a transmission rate is not higher than a first rate threshold; reliability is not higher than a first reliability threshold.

Configuring the second frequency domain includes configuring at least one second frequency domain. The second frequency domain includes at least one state among an activated state, an inactive state, and a dormant state.

The third frequency domain (i.e., the non-power-saving frequency domain in this embodiment) may be configured for the network device by a network including at least one of a network device node, a core network, or a terminal node.

The third frequency domain may be configured for the network device by the network based on at least one of the following signalings: the static or semi-static signaling (such as the RRC signaling, the SIB signaling, etc.), or the dynamic signaling, etc.

The third frequency domain may include at least one of the following: a frequency domain used for data transmission; a frequency domain for UE-specific information transmission; a frequency domain for UE-group information transmission; or a frequency domain for data transmission in case that the load of the network device meets a second condition.

The second condition may be at least one of the following:
the load of the network device is not lower than a fifth threshold;
a quantity and/or proportion of terminals attached to the network device is not lower than a sixth threshold;
QoS of the load of the network device meets a seventh threshold; or
a bandwidth requirement of the network device is not higher than an eighth threshold.

The QoS of the load of the network device meets the seventh threshold includes at least one of the following: the latency is not higher than a second latency threshold; the transmission rate is not lower than a second rate threshold; or the reliability is not lower than a second reliability threshold.

Configuring the third frequency domain includes configuring at least one third frequency domain. The third frequency domain includes at least one state among an activated state, an inactive state, or a dormant state.

A frequency domain used for actual transmission of the network device (represented as the sixth frequency domain in this embodiment) may include at least one of the second frequency domain, the third frequency domain, a portion of the second frequency domain, or a portion of the third frequency domain.

A relationship between the sixth frequency domain, the third frequency domain, and the second frequency domain may include at least one of the following:
the sixth frequency domain is a maximum of the second frequency domain and/or the third frequency domain;
the sixth frequency domain is a minimum of the second frequency domain and/or the third frequency domain; or
the starting and ending positions of the sixth frequency domain: the starting position is an RB with lowest serial number in the second frequency domain and/or the third frequency domain; the starting position is an RB with highest serial number in the second frequency domain and/or the third frequency domain; the ending position is the RB with lowest serial number in the second frequency domain and/or the third frequency domain; the ending position is the RB with highest serial number in the second frequency domain and/or the third frequency domain; alternatively, the starting position is the RB with highest serial number in the second frequency domain and/or the third frequency domain, and the ending position is the RB with lowest serial number in the second frequency domain and/or the third frequency domain; alternatively, the starting position is the RB with lowest serial number in the second frequency domain and/or the third frequency domain, and the ending position is the RB with highest serial number in the second frequency domain and/or the third frequency domain.

FIG. 2 is a schematic diagram of a bandwidth relationship between different frequency domains according to an embodiment of the present application. As shown in FIG. 2, four types of bandwidth relationships among the second frequency domain, the third frequency domain, and the sixth frequency domain are illustrated. (1) in FIG. 2 represents that center frequency points of the second frequency domain and the third frequency domain are align, and the sixth frequency domain may be the maximum of the second frequency domain and/or the third frequency domain, or the sixth frequency domain may be the minimum of the second frequency domain and/or the third frequency domain; (2) in FIG. 2 represents that the second frequency domain and the third frequency domain intersect, and the sixth frequency domain may be the maximum of the second frequency domain and/or the third frequency domain, or the sixth frequency domain may be the minimum of the second frequency domain and/or the third frequency domain; (3) in FIG. 2 represents that the second frequency domain and the third frequency domain are orthogonal, and the sixth frequency domain may be the second frequency domain, or the third frequency domain, or a bandwidth greater than or equal to the intersection of the second frequency domain and the third frequency domain; (4) and (3) in FIG. 2 are the same except for a difference that there is a bandwidth gap between the second frequency domain and the third frequency domain.

### 2. Transmitting frequency domain change information of the network device.

Same as the Embodiment 1. A difference lies in: the frequency domain change of the network device includes at least one of the following: a change in the second frequency domain, a change in the third frequency domain, or a change in the frequency domain for the network device between the second frequency domain and the third frequency domain.

### 3. Transmitting based on the configured frequency domain.

The network device transmits the relevant data, information, or signal based on the configured frequency domain.

Embodiment 3: a network device transmits based on a frequency domain on the network device side and a frequency domain on a terminal side.

### 1. Configuring at least one of the frequency domain on the network device side or the frequency domain on the terminal side.

Configuration of the frequency domain on the network device side may refer to Embodiment 1 or Embodiment 2, and configuration of the frequency domain on the terminal side may refer to the configuration of the frequency domain on the network device side or other traditional modes of configuring the frequency domain on the terminal side.

A difference between Embodiment 3 and Embodiment 1 and Embodiment 2 is that:
a frequency domain used for actual transmission of the network device (represented as the seventh frequency domain in this embodiment) may include at least one of the frequency domain on the network device side or the frequency domain on the terminal side.

The frequency domain on the network device side may be at least one of the first frequency domain, the second frequency domain, the third frequency domain, or the sixth frequency domain.

The frequency domain on the terminal side includes at least one of the following: at least one of the configured frequency domain for the terminal, or at least one of the configured frequency domain for the UE-group.

A bandwidth of the seventh frequency domain in the frequency domain may be determined based on at least one of the following:
a bandwidth of the frequency domain on the network device side, a bandwidth of the frequency domain on the terminal side, or a sum of the bandwidths of the frequency domain on the network device side and the frequency domain on the terminal side.

For example, the frequency domain on the network device side includes RB numbered 1-25, and the frequency domain on the terminal side includes RB numbered 50-75. The seventh frequency domain may be configured as the sum of the frequency domain on the network device side and the frequency domain on the terminal side, including RB numbered 1-75.

The seventh frequency domain may decrease the transmission bandwidth of the network device to save power in case that the first parameter meets the condition of decreasing transmission bandwidth; and in case that the first parameter meets the condition of increasing transmission bandwidth, the transmission bandwidth of the network device is increased to improve transmission efficiency and enhance user experience.

The first parameter includes one or more of the following: the size of the load; the type of the load; the size of a cache; the type of the cache; the type of a service; or the QoS indicator of the service, etc.

### 2. Transmitting frequency domain change information of the network device (referring to Embodiment 1 or Embodiment 2 for details).

In case that the transmission frequency domain for the network device changes (or updates), the first information (i.e., the frequency domain change information of the network device in this embodiment) may be transmitted to notify the changed transmission frequency domain for the network device.

Transmitting frequency domain change information of the network device includes at least one of the following modes: static or semi-static signaling transmission, dynamic signaling or signal transmission, MAC-CE transmission, or timer-triggered transmission.

The frequency domain change of the network device includes at least one of the following triggering conditions. Based on different triggering conditions, the network device is configured with different frequency domains to save power on the network device side.

The triggering condition includes at least one of the following: a service change, a change in a proportion or quantity of attached terminals, a frequency domain change triggered by an attached terminal on the network device side, or a change in transmission type, etc.

The transmission of frequency domain change information includes at least one of the following: information notifying a frequency domain change or an identifier of the information notifying the frequency domain change.

### 3. Transmitting based on the configured frequency domain.

The network device transmits the relevant data, information, or signal based on the configured frequency domain.

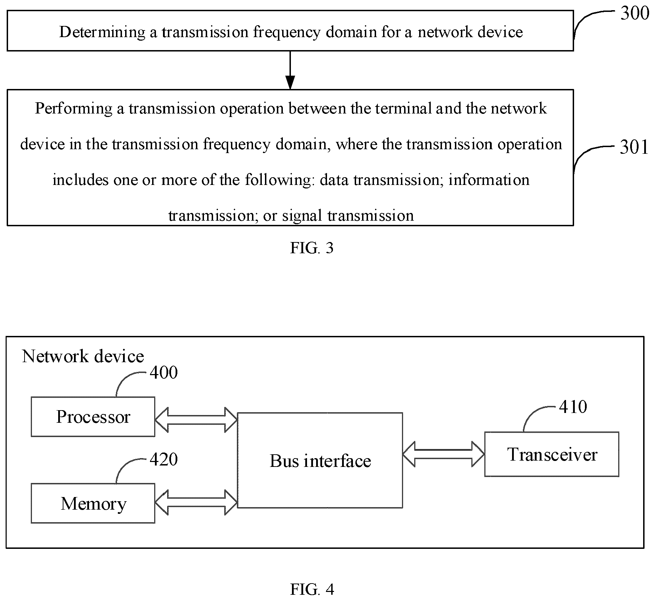

FIG. 3 is a second schematic flowchart of a method for transmission processing according to an embodiment of the present application. The method may be performed by a terminal, such as a user equipment (UE). As shown in FIG. 3, the method includes the following steps:
step 300: determining a transmission frequency domain for a network device; and
step 301: performing a transmission operation between the terminal and the network device in the transmission frequency domain, where the transmission operation includes one or more of the following:
   data transmission; information transmission; or signal transmission.

To save power for the network device, the embodiment of the present application provides a frequency domain based network power saving scheme. By configuring a transmission frequency domain for the network device, the network device may adjust its transmission bandwidth as needed, which effectively reduces power consumption.

The transmission frequency domain for the network device refers to a frequency domain actually used for transmission by the network device.

In an embodiment, the frequency domain described in various embodiments of the present application may be a segment of resource in the frequency domain. For example, the frequency domain may include at least one of a cell, a carrier, or a bandwidth part (BWP).

In the embodiment of the present application, the terminal may perform the transmission operation between the terminal and the network device in the transmission frequency domain after determining the transmission frequency domain for the network device, such as one or more of the data transmission, the information transmission, or the signal transmission. Transmission may be transmitting and/or receiving, which is not limited herein.

In an embodiment, the data transmission may include one or more of the following: transmission of PDSCH, transmission of PDCCH, transmission of PUSCH, or transmission of PUCCH.

In an embodiment, the information transmission may include one or more of the following.

### (1) Transmission of CSI measurement value information.

In an embodiment, the CSI measurement value information may include one or more of CQI, MCS, PMI, RI, or a codebook.

### (2) Transmission of RRM measurement value information.

In an embodiment, the RRM measurement value information may include one or more of RSRP, RSRQ, RSSI, or SINR.

### (3) Transmission of beam measurement value information.

In an embodiment, the beam measurement value information may include one or more of a quantity of beams, beam quality, beam coverage, or a beam angle.

In an embodiment, the signal transmission may include one or more of the following.

### (1) Transmission of a reference signal.

In an embodiment, the reference signal may include one or more of a channel state measurement reference signal, an RRM measurement reference signal, a beam measurement reference signal, a time-frequency tracking reference signal, a positioning reference signal, a phase tracking reference signal, or a channel sounding reference signal.

### (2) Transmission of a synchronization signal.

In an embodiment, the synchronization signal may include one or more of a fine synchronization signal or a coarse synchronization signal.

### (3) Transmission of a broadcast signal.

In an embodiment, the broadcast signal may include one or more of a cell-specific broadcast signal, a cell-group broadcast signal, a core network broadcast signal, or a UE-group broadcast signal.

### (4) Transmission of a PRACH signal.

The frequency domain described in various embodiments of the present application may include at least one state among an activated state, an inactive state, or a dormant state.

In an embodiment, one or more of data transmission, information transmission, or signal transmission may be performed in the activated frequency domain.

In an embodiment, one or more of the following may be included in the inactive frequency domain: no data transmission, no information transmission, or no signal transmission.

In an embodiment, no data transmission includes one or more of no transmission of PDCCH, no transmission of PDSCH, no transmission of PUCCH, no transmission of PUSCH, or no transmission of PRACH.

In an embodiment, no information transmission includes one or more of no transmission of CSI measurement value information, no transmission of RRM measurement value information, or no transmission of beam measurement value information.

In an embodiment, no signal transmission includes one or more of no transmission of reference signal, no transmission of synchronization signal, or no transmission of broadcast signal.

In an embodiment, in the dormant frequency domain, similar to the inactive frequency domain, one or more of the following may be included: no data transmission, no information transmission, or no signal transmission. A difference between the dormant frequency domain and the inactive frequency domain is that transmission of channel state measurement value, or transmission of channel state reference signal, or transmission of channel sounding signal reference signal may be maintained in the dormant frequency domain.

In the method for transmission processing provided in the embodiments of the present application, the terminal may determine the transmission frequency domain for the network device and perform the transmission operation between the terminal and the network device in the determined transmission frequency domain. The network device may perform the transmission operation based on the frequency domain, which saves power for the network device.

In an embodiment, determining the transmission frequency domain for the network device includes:
receiving first information transmitted from the network device based on a first mode, where the first information is used for indicating the transmission frequency domain for the network device; and
determining the transmission frequency domain for the network device based on the first information;
the first mode includes one or more of the following:
   static or semi-static signaling transmission;
   dynamic signaling or signal transmission;
   media access control layer control element transmission; or
   timer-triggered transmission.

After determining the transmission frequency domain (initial or updated transmission frequency domain), the network device may transmit the first information. The first information may be used for indicating the transmission frequency domain determined by the network device. After receiving the first information, the terminal may determine the transmission frequency domain for the network device based on the first information.

**In** an embodiment, the first information may indicate the transmission frequency domain determined by the network device in a direct manner or an indirect manner.

**In** an embodiment, the first information may include information of the transmission frequency domain determined by the network device or an identifier of the information of the transmission frequency domain determined by the network device.

**In** an embodiment, the information of the transmission frequency domain determined by the network device may include one or more of a quantity of transmission frequency domains, a serial number of transmission frequency domain, or configuration of a frequency domain resource in the transmission frequency domain.

In an embodiment, the configuration of the frequency domain resource in the transmission frequency domain may include one or more of the following:
(1) a position distribution of RBs and/or REs of the frequency domain resource;
(2) a starting position of the frequency domain resource;
(3) an ending position of the frequency domain resource; or
(4) a quantity of RBs and/or REs of the frequency domain resource.

In an embodiment, the identifier of the information of the transmission frequency domain determined by the network device may include one or more of an identifier of the quantity of transmission frequency domains, an identifier of the serial number of transmission frequency domains, or an identifier of the configuration of the frequency domain resource in the transmission frequency domain.

In an embodiment, the identifier of the configuration of the frequency domain resource in the transmission frequency domain may include one or more of the following:
(1) an identifier of the position distribution of RBs and/or REs of the frequency domain resource;
(2) an identifier of the starting position of the frequency domain resource;
(3) an identifier of the ending position of the frequency domain resource; or
(4) an identifier of the quantity of RBs and/or REs of the frequency domain resource.

In an embodiment, the network device may transmit the first information through one or more of the following modes: static or semi-static signaling transmission, dynamic signaling or signal transmission, MAC-CE transmission, or timer-triggered transmission, etc. Correspondingly, the terminal may receive the first information transmitted from the network device through one or more of the static or semi-static signaling transmission, the dynamic signaling or signal transmission, or the MAC-CE transmission, etc.

In an embodiment, the static or semi-static signaling may include one or more of an SIB signaling, an RRC signaling, or a broadcast signaling.

In an embodiment, the dynamic signaling or signal may include one or more of a control signaling or a node reference signal.

In an embodiment, the control signaling may include an uplink or a downlink control signaling.

In an embodiment, the node reference signal may include one or more of a node discovery signal, a node channel state reference signal, a node synchronization signal, a node time-frequency tracking reference signal, or a node positioning signal, etc.

In an embodiment, a node in the node reference signal may be the network device and/or the terminal.

In an embodiment, determining the transmission frequency domain for the network device includes:
determining the transmission frequency domain for the network device based on frequency domain configuration information.

In an embodiment, the terminal may determine the transmission frequency domain for the network device based on the frequency domain configuration information.

In an embodiment, the terminal may determine the initial or updated transmission frequency domain for the network device based on the frequency domain configuration information; or, the terminal may receive indication information (indicating the transmission frequency domain determined by the network device) transmitted from the network device to the terminal after updating the transmission frequency domain, and the terminal may determine the updated transmission frequency domain for the network device based on the indication information.

In an embodiment, the frequency domain configuration information may be configured by the core network for the terminal, or transmitted from the network device to the terminal, or pre-configured in the terminal, or any combination of the three modes.

In an embodiment, the frequency domain configuration information may include initially configured frequency domain configuration information or dynamically updated frequency domain configuration information.

In an embodiment, the frequency domain configuration information may be configured for the terminal by the core network or the network device based on one or more signalings such as a static or semi-static signaling or a dynamic signaling, etc. For example, the static or semi-static signaling may include a SIB signaling, an RRC signaling, a broadcast signaling, or other static or semi-static signalings, etc.; the dynamic signaling may be a control signaling or other dynamic signalings, etc.

In an embodiment, determining the transmission frequency domain for the network device based on the frequency domain configuration information includes:
determining the transmission frequency domain for the network device based on the frequency domain configuration information on a network device side and/or the frequency domain configuration information on a terminal side.

The frequency domain configuration information may include frequency domain configuration information on the network device side and/or frequency domain configuration information on the terminal side. The terminal may determine the transmission frequency domain for the network device based on the frequency domain configuration information on the network device side and/or the frequency domain configuration information on the terminal side.

In an embodiment, the frequency domain configuration information on the terminal side may include frequency domain configuration information configured for a single terminal and/or frequency domain configuration information configured for a (UE-group).

In an embodiment, determining the transmission frequency domain for the network device based on the frequency domain configuration information on the network device side and/or the frequency domain configuration information on the terminal side includes:
determining the transmission frequency domain for the network device based on a first frequency domain;
where the first frequency domain is a frequency domain indicated in the frequency domain configuration information on the network device side and/or the frequency domain configuration information on the terminal side.

The first frequency domain may be one or more, and the network device may determine the transmission frequency domain for the network device based on the first frequency domain indicated in the frequency domain configuration information on the network device side and/or the frequency domain configuration information on the terminal side. For example, the first frequency domain may be determined as the transmission frequency domain for the network device.

In an embodiment, the first frequency domain may include a fixed bandwidth frequency domain and/or a variable bandwidth frequency domain.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

The second frequency domain may be one or more, and the third frequency domain may be one or more. The terminal may determine the transmission frequency domain for the network device based on the second frequency domain and/or the third frequency domain.

In an embodiment, the second frequency domain may include a fixed bandwidth frequency domain and/or a variable bandwidth frequency domain.

In an embodiment, the third frequency domain may include a fixed bandwidth frequency domain and/or a variable bandwidth frequency domain.

For example, the terminal may determine the transmission frequency domain for the network device based on the second frequency domain indicated in the frequency domain configuration information on the network device side.

For example, the terminal may determine the transmission frequency domain for the network device based on the third frequency domain indicated in the frequency domain configuration information on the network device side.

For example, the terminal may determine the transmission frequency domain for the network device based on the second frequency domain and the third frequency domain indicated in the frequency domain configuration information on the network device side.

For example, the second frequency domain and the third frequency domain may also be frequency domains indicated in the frequency domain configuration information on the terminal side, or one of the second frequency domain and the third frequency domain may be a frequency domain indicated in the frequency domain configuration information on the terminal side, etc., which is not limited herein.

In an embodiment, determining the transmission frequency domain for the network device based on the second frequency domain and/or the third frequency domain may include any of the following.

### (1) Determining the transmission frequency domain for the network device based on a maximum frequency domain of the second frequency domain and/or the third frequency domain.

For example, the maximum frequency domain among multiple second frequency domains (i.e., a frequency domain with maximum bandwidth) may be determined as the transmission frequency domain for the network device.

For example, the maximum frequency domain among multiple third frequency domains may be determined as the transmission frequency domain for the network device.

For example, the maximum frequency domain in a frequency domain set composed of the second frequency domain and the third frequency domain may be determined as the transmission frequency domain for the network device.

For example, a bandwidth of the maximum frequency domain in the second frequency domains and a bandwidth of the maximum frequency domain in the third frequency domains may be added to obtain the transmission frequency domain for the network device.

### (2) Determining the transmission frequency domain for the network device based on a minimum frequency domain in the second frequency domain and/or the third frequency domain.

For example, the minimum frequency domain (i.e., the frequency domain with minimum bandwidth) among multiple second frequency domains may be determined as the transmission frequency domain for the network device.

For example, the minimum frequency domain among multiple third frequency domains may be determined as the transmission frequency domain for the network device.

For example, the minimum frequency domain in a frequency domain set composed of the second frequency domain and the third frequency domain may be determined as the transmission frequency domain for the network device.

For example, a bandwidth of the minimum frequency domain in the second frequency domain and a bandwidth of the minimum frequency domain in the third frequency domain may be added to obtain the transmission frequency domain for the network device.

### (3) Determining the starting and ending positions of the transmission frequency domain for the network device based on RB serial numbers in the second frequency domain and/or the third frequency domain.

In an embodiment, the starting position of the transmission frequency domain for the network device may be determined based on an RB with lowest serial number in the second frequency domain and/or the third frequency domain. For example, the RB with lowest serial number in the second frequency domain may be determined as the starting position of the transmission frequency domain for the network device; for example, the RB with lowest serial number in the third frequency domain may be determined as the starting position of the transmission frequency domain for the network device; for example, the RB with lowest serial number in a frequency domain set composed of the second frequency domain and the third frequency domain may be determined as the starting position of the transmission frequency domain for the network device. In this case, the ending position of the transmission frequency domain for the network device may be set as needed, which is not limited herein.

In an embodiment, the starting position of the transmission frequency domain for the network device may be determined based on an RB with highest serial number in the second frequency domain and/or the third frequency domain. For example, the RB with highest serial number in the second frequency domain may be determined as the starting position of the transmission frequency domain for the network device; for example, the RB with highest serial number in the third frequency domain may be determined as the starting position of the transmission frequency domain for the network device; for example, the RB with highest serial number in a frequency domain set composed of the second frequency domain and the third frequency domain may be determined as the starting position of the transmission frequency domain for the network device. In this case, the ending position of the transmission frequency domain for the network device may be set as needed, which is not limited herein.

In an embodiment, the ending position of the transmission frequency domain for the network device may be determined based on an RB with lowest serial number in the second frequency domain and/or the third frequency domain. For example, the RB with lowest serial number in the second frequency domain may be determined as the ending position of the transmission frequency domain for the network device; for example, the RB with lowest serial number in the third frequency domain may be determined as the ending position of the transmission frequency domain for the network device; for example, the RB with lowest serial number in a frequency domain set composed of the second frequency domain and the third frequency domain may be determined as the ending position of the transmission frequency domain for the network device. In this case, the starting position of the transmission frequency domain for the network device may be set as needed, which is not limited herein.

In an embodiment, the ending position of the transmission frequency domain for the network device may be determined based on an RB with highest serial number in the second frequency domain and/or the third frequency domain. For example, the RB with highest serial number in the second frequency domain may be determined as the ending position of the transmission frequency domain for the network device; for example, the RB with highest serial number in the third frequency domain may be determined as the ending position of the transmission frequency domain for the network device; for example, the RB with highest serial number in a frequency domain set composed of the second frequency domain and the third frequency domain may be determined as the ending position of the transmission frequency domain for the network device. In this case, the starting position of the transmission frequency domain for the network device may be set as needed, which is not limited herein.

In an embodiment, the starting position of the transmission frequency domain for the network device may be determined based on the RB with lowest serial number in the second frequency domain and/or the third frequency domain, and the ending position of the transmission frequency domain for the network device may be determined based on the RB with highest serial number in the second frequency domain and/or the third frequency domain. The mode is a combination of the mode for determining the starting position of the transmission frequency domain for the network device and the mode for determining the ending position of the transmission frequency domain for the network device, which is not limited herein.

In an embodiment, the starting position of the transmission frequency domain for the network device may be determined based on the RB with highest serial number in the second frequency domain and/or the third frequency domain, and the ending position of the transmission frequency domain for the network device may be determined based on the RB with lowest serial number in the second frequency domain and/or the third frequency domain. The mode is a combination of the mode for determining the starting position of the transmission frequency domain for the network device and the mode for determining the ending position of the transmission frequency domain for the network device, which is not limited herein.

In an embodiment, the second frequency domain includes one or more of the following:
(1) a frequency domain used for information transmission and/or signal transmission for the network device in a power-saving state; for example, the network device may be preset with a power-saving state or power-saving mode, in which the network device uses the second frequency domain for information transmission and/or signal transmission;
(2) a minimum frequency domain used for transmission; for example, a frequency domain with a smallest bandwidth used for transmission;
(3) a frequency domain used for information transmission at a cell level; that is, a frequency domain used by the network device for cell level information transmission;
(4) a frequency domain used for information transmission for a UE-group; that is, a frequency domain used by the network device for information transmission for the UE-group; or
(5) a frequency domain used for data transmission in case that a load of the network device meets a first condition; that is, a frequency domain used by the network device for data transmission under the first condition.

In an embodiment, the first condition includes one or more of the following:
the load of the network device is not higher than a first threshold;
a quantity and/or proportion of terminals attached to the network device is not higher than a second threshold;
QoS of the load of the network device meets a third threshold; or
a bandwidth requirement for the network device is not higher than a fourth threshold.

In an embodiment, the QoS of the load of the network device meets the third threshold may include one or more of the following: a latency of the network device is not lower than a first latency threshold, a transmission rate of the network device is not higher than a first rate threshold, or reliability of the network device is not higher than first reliability threshold.

The values of the above thresholds may be flexibly set as needed, which is not limited herein.

In an embodiment, the third frequency domain includes one or more of the following:
(1) a frequency domain used for data transmission; that is, a frequency domain used by the network device for data transmission;
(2) a frequency domain used for UE-specific information transmission; that is, a frequency domain used by the network device for UE-specific information transmission;
(3) a frequency domain used for information transmission for a UE-group; that is, a frequency domain used by the network device for information transmission for the UE-group; or
(4) a frequency domain used for data transmission in case that the load of the network device meets a second condition; that is, a frequency domain used by the network device for data transmission under the second condition.

In an embodiment, the second condition may include one or more of the following:
the load of the network device is not lower than a fifth threshold;
a quantity and/or proportion of terminals attached to the network device is not lower than a sixth threshold;
QoS of the load of the network device meets a seventh threshold; or
a bandwidth requirement of the network device is not lower than an eighth threshold.

In an embodiment, the QoS of the load of the network device meets the seventh threshold may include one or more of the following: a latency of the network device is not higher than a second latency threshold, a transmission rate of the network device is not lower than a second rate threshold, or reliability of the network device is not lower than second reliability threshold.

The values of the above thresholds may be flexibly set as needed, which is not limited herein.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
where the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

The fourth frequency domain may be one or more, and the fifth frequency domain may be one or more.

In an embodiment, the fourth frequency domain may be the frequency domain indicated in the frequency domain configuration information on the network device side. For example, the fourth frequency domain may be one or more of the first frequency domain, the second frequency domain, the third frequency domain, or other frequency domains indicated in the frequency domain configuration information on the network device side.

In an embodiment, the fourth frequency domain may be the frequency domain determined based on the frequency domain indicated in the frequency domain configuration information on the network device side. For example, the fourth frequency domain may be the frequency domain determined based on one or more of the first frequency domain, the second frequency domain, the third frequency domain, or other frequency domains indicated in the frequency domain configuration information on the network device side.

In an embodiment, the fifth frequency domain may be the frequency domain indicated in the frequency domain configuration information on the terminal side. For example, the fifth frequency domain may be one or more of the first frequency domain, the second frequency domain, the third frequency domain, or other frequency domains indicated in the frequency domain configuration information on the terminal side.

In an embodiment, the fifth frequency domain may be the frequency domain determined based on the frequency domain indicated in the frequency domain configuration information on the terminal side. For example, the fifth frequency domain may be the frequency domain determined based on one or more of the first frequency domain, the second frequency domain, the third frequency domain, or other frequency domains indicated in the frequency domain configuration information on the terminal side.

For example, the terminal may determine the transmission frequency domain for the network device based solely on the fourth frequency domain (such as the maximum frequency domain, the minimum frequency domain, and the RB serial number, etc. in the fourth frequency domain).

For example, the terminal may determine the transmission frequency domain for the network device based solely on the fifth frequency domain (such as the maximum frequency domain, the minimum frequency domain, and the RB serial number, etc. in the fifth frequency domain).

For example, the terminal may determine the transmission frequency domain for the network device based on the fourth frequency domain and the fifth frequency domain (such as the maximum frequency domain, the minimum frequency domain, the RB serial number, etc. in the fourth frequency domain and/or the fifth frequency domain).

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

The terminal may determine the bandwidth of the transmission frequency domain for the network device based on the sum of the bandwidths of the fourth frequency domain and the fifth frequency domain, determine a center frequency point position, the starting position, the ending position, etc. of the transmission frequency domain for the network device through any other means, and then determine the transmission frequency domain for the network device.

In an embodiment, the starting position of the fourth frequency domain or the fifth frequency domain may be the starting position of the transmission frequency domain for the network device; or the ending position of the fourth frequency domain or the fifth frequency domain may be the ending position of the transmission frequency domain for the network device; or the center frequency point position of the fourth frequency domain or the fifth frequency domain may be the center frequency point position of the transmission frequency domain for the network device.

In an embodiment, the terminal may use the sum of the bandwidths of the fourth frequency domain and the fifth frequency domain as the bandwidth of the transmission frequency domain for the network device.

In an embodiment, the terminal may subtract twice the bandwidth of the intersection between the fourth frequency domain and the fifth frequency domain from the sum of the bandwidths of the fourth frequency domain and the fifth frequency domain as the bandwidth of the transmission frequency domain for the network device.

In an embodiment, the terminal may add the bandwidth of an interval between the fourth frequency domain and the fifth frequency domain to the sum of the bandwidths of the fourth frequency domain and the fifth frequency domain as the bandwidth of the transmission frequency domain for the network device.

It should be noted that the modes for determining the transmission frequency domain for the network device listed in various embodiments of the present application are only exemplary and not exhaustive, and do not constitute limitations on the methods for determining the transmission frequency domain for the network device in various embodiments of the present application.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device.

In case of determining the transmission frequency domain, the terminal may determine, in conjunction with the first parameter used for representing the load of the network device, whether the network device need to increase or decrease the transmission bandwidth. The transmission frequency domain may be determined using the methods adopted in the above embodiments based on the frequency domain configuration information on the network device side and/or the frequency domain configuration information on the terminal side.

In an embodiment, the information of the first parameter used for representing the load of the network device may be obtained by the terminal from the network device or through other means, which is not limited herein.

In an embodiment, the first parameter may include one or more of the following: a size of the load; a type of the load; a size of a cache; a type of the cache; a type of a service; or a QoS indicator of the service.

For example, the terminal may determine that the network device needs to decrease the transmission bandwidth in case that the first parameter meets some conditions (such as a small load and a load type not requiring a large transmission bandwidth, etc.). In case of determining the transmission frequency domain, the frequency domain with lower bandwidth may be selected preferentially as the transmission frequency domain.

For example, the terminal may determine that the network device needs to increase the transmission bandwidth in case that the first parameter meets some conditions (such as a high load and a load type requiring large transmission bandwidth, etc.). In case of determining the transmission frequency domain, the frequency domain with larger bandwidth may be selected preferentially as the transmission frequency domain.

The following embodiments illustrate the methods provided in the above embodiments of the present application through specific application scenarios.

Embodiment 4: a terminal obtains a frequency domain for a network device and transmits based on the frequency domain for the network device.

### 1. Obtaining configuration of the frequency domain on the network device side.

The configuration of the frequency domain on the network device side may be one or more of the frequency domains configured on the network device side in the Embodiment 1, Embodiment 2, or Embodiment 3.

The configuration of the frequency domain on the network device side may be obtained by the terminal from at least one of a network device node, or a core network, etc.

The terminal obtains the configuration of the frequency domain on the network device side by receiving based on at least one of the following signalings: a static or semi-static signaling (an RRC signaling or a SIB signaling) or a dynamic signaling, etc.

### 2. Receiving frequency domain change information of the network device.

In case that the transmission frequency domain for the network device changes (or updates), the first information (i.e., the frequency domain change information of the network device in this embodiment) may be transmitted to notify the terminal of the changed transmission frequency domain for the network device.

The transmission of the frequency domain change information by the network device is the same as described in Embodiment 1, Embodiment 2, and Embodiment 3, and is not repeated here.

### 3. Transmitting based on the received frequency domain information of the network device.

The network device transmits the relevant data, information, and signal based on the configured frequency domain. Correspondingly, the terminal transmits the data, the information, and the signal with the network device in the received transmission frequency domain for the network device.

In an embodiment, the terminal may measure the relevant information in the received transmission frequency domain for the network device, such as at least one of the following: a channel state measurement value, an RRM measurement value, or a beam measurement value, etc.

The methods provided in each embodiment of the present application are based on the same application conception, the implementation of each method may refer to each other, and the repeated parts are not repeated.

The methods and apparatuses provided in the various embodiments of the present application are based on the same application conception. Since the methods and apparatuses solve problems based on similar principles, the implementation of the apparatuses and methods may refer to each other, and the repeated parts are not repeated.

FIG. 4 is a schematic structural diagram of a network device according to an embodiment of the present application. As shown in FIG. 4, the network device includes a memory 420, a transceiver 410, and a processor 400; the processor 400 and the memory 420 may also be arranged physically separately.

The memory 420 is used for storing a computer program; the transceiver 410 is used for transmitting and receiving data under control of the processor 400.

The transceiver 410 is used for receiving and transmitting data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 410 may include multiple elements, i.e., including a transmitter and a receiver, units for providing communication with various other devices over transmission media including wireless channels, wired channels, fiber optic cables, and the like.

The processor 400 is responsible for managing the bus architecture and general processing, and the memory 420 may store data used by the processor 400 when performing operations.

The processor 400 may be a central processing unit (CPU), an application specific integrated circuit (ASIC), a field-programmable gate array (FPGA), or a complex programmable logic device (CPLD), the processor may also use a multi-core architecture.

The processor 400 calls the computer program stored in the memory 420 to execute any of the methods performed by the network device provided by the embodiments of the present application based on the obtained executable instructions. For example: determining the transmission frequency domain for the network device based on frequency domain configuration information; performing a transmission operation in the transmission frequency domain, where the transmission operation includes one or more of the following: data transmission, information transmission, or signal transmission.

In an embodiment, after determining the transmission frequency domain for the network device, the method further includes:
transmitting first information based on a first mode, where the first information is used for indicating the transmission frequency domain;
the first mode includes one or more of the following:
   static or semi-static signaling transmission;
   dynamic signaling or signal transmission;
   media access control layer control element transmission; or
   timer-triggered transmission.

In an embodiment, determining the transmission frequency domain for the network device based on the frequency domain configuration information includes:
determining the transmission frequency domain for the network device based on the frequency domain configuration information on the network device side and/or the frequency domain configuration information on a terminal side.

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

In an embodiment, the second frequency domain includes one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
where the first condition includes one or more of the following:
   the load of the network device is not higher than a first threshold;
   a quantity and/or proportion of terminals attached to the network device is not higher than a second threshold;
   quality of service of the load of the network device meets a third threshold; or
   a bandwidth requirement for the network device is not higher than a fourth threshold.

In an embodiment, the third frequency domain includes one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
where the second condition includes one or more of the following:
   the load of the network device is not lower than a fifth threshold;
   a quantity and/or proportion of terminals attached to the network device is not lower than a sixth threshold;
   quality of service of the load of the network device meets a seventh threshold; or
   a bandwidth requirement of the network device is not lower than an eighth threshold.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device;
the first parameter includes one or more of the following:
   a size of the load; a type of the load; a size of a cache; a type of the cache; a type of a service; or a quality of service indicator of the service.

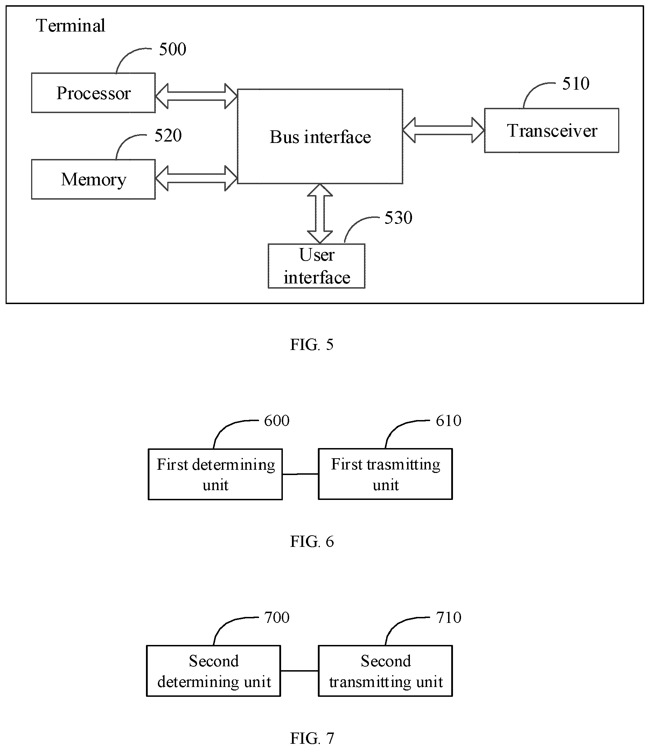

FIG. 5 is a schematic structural diagram of a terminal according to an embodiment of the present application. As shown in FIG. 5, the terminal includes a memory 520, a transceiver 510, and a processor 500; the processor 500 and the memory 520 may also be arranged physically separately.

The memory 520 is used for storing a computer program; the transceiver 510 is used for transmitting and receiving data under control of the processor 500.

The transceiver 510 is used for receiving and transmitting data under control of the processor 500.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 510 may include multiple elements, i.e., including a transmitter and a receiver, units for providing communication with various other devices over transmission media including wireless channels, wired channels, fiber optic cables, and the like. For different user equipment, a user interface 530 may be an interface capable of externally or internally connecting the required equipment, and the connected equipment includes, but not limited to, a keypad, a display, a speaker, a microphone, a joystick, and the like.

The processor 500 is responsible for managing the bus architecture and general processing, and the memory 520 may store data used by the processor 500 when performing operations.

The processor 500 may be a CPU, an ASIC, an FPGA, or a CPLD, and the processor may also adopt a multi-core architecture.

The processor 500 calls the computer program stored in the memory 520 to execute any of the methods performed by the terminal provided by the embodiments of the present application based on the obtained executable instructions. For example: determining a transmission frequency domain for the network device; performing a transmission operation between the terminal and the network device in the transmission frequency domain, where the transmission operation includes one or more of the following: data transmission, information transmission, or signal transmission.

In an embodiment, determining the transmission frequency domain for the network device includes:
receiving first information transmitted from the network device based on a first mode, where the first information is used for indicating the transmission frequency domain for the network device; and
determining the transmission frequency domain for the network device based on the first information;
the first mode includes one or more of the following:
   static or semi-static signaling transmission;
   dynamic signaling or signal transmission;
   media access control layer control element transmission; or
   timer-triggered transmission.

In an embodiment, determining the transmission frequency domain for the network device includes:
determining the transmission frequency domain for the network device based on frequency domain configuration information.

In an embodiment, determining the transmission frequency domain for the network device based on the frequency domain configuration information includes:
determining the transmission frequency domain for the network device based on the frequency domain configuration information on a network device side and/or the frequency domain configuration information on a terminal side.

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

In an embodiment, the second frequency domain includes one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
where the first condition includes one or more of the following:
   the load of the network device is not higher than a first threshold;
   a quantity and/or proportion of terminals attached to the network device is not higher than a second threshold;
   quality of service of the load of the network device meets a third threshold; or
   a bandwidth requirement for the network device is not higher than a fourth threshold.

In an embodiment, the third frequency domain includes one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
where the second condition includes one or more of the following:
   the load of the network device is not lower than a fifth threshold;
   a quantity and/or proportion of terminals attached to the network device is not lower than a sixth threshold;
   quality of service of the load of the network device meets a seventh threshold; or
   a bandwidth requirement of the network device is not lower than an eighth threshold.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device;
the first parameter includes one or more of the following:
   a size of the load; a type of the load; a size of a cache; a type of the cache; a type of a service; or a quality of service indicator of the service.

It should be noted that the above network device and terminal provided in an embodiment of the present application may implement all the method steps implemented in the above method embodiments and achieve the same technical effects. The same parts and beneficial effects as the method embodiments in this embodiment are not specifically described herein.

FIG. 6 is a first schematic structural diagram of an apparatus for transmission processing according to an embodiment of the present application. The apparatus may be used in a network device. As shown in FIG. 6, the apparatus includes:
a first determining unit 600, used for determining a transmission frequency domain for the network device based on frequency domain configuration information; and
a first transmitting unit 610, used for performing a transmission operation in the transmission frequency domain, where the transmission operation includes one or more of the following:
   data transmission; information transmission; or signal transmission.

In an embodiment, the apparatus further includes:
a transmitting unit, used for transmitting first information based on a first mode, where the first information is used for indicating the transmission frequency domain;
the first mode includes one or more of the following:
   static or semi-static signaling transmission;
   dynamic signaling or signal transmission;
   media access control layer control element transmission; or
   timer-triggered transmission.

In an embodiment, determining the transmission frequency domain for the network device based on the frequency domain configuration information includes:
determining the transmission frequency domain for the network device based on the frequency domain configuration information on the network device side and/or the frequency domain configuration information on a terminal side.

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

In an embodiment, the second frequency domain includes one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
where the first condition includes one or more of the following:
   the load of the network device is not higher than a first threshold;
   a quantity and/or proportion of terminals attached to the network device is not higher than a second threshold;
   quality of service of the load of the network device meets a third threshold; or a bandwidth requirement for the network device is not higher than a fourth threshold.

In an embodiment, the third frequency domain includes one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
where the second condition includes one or more of the following:
   the load of the network device is not lower than a fifth threshold;
   a quantity and/or proportion of terminals attached to the network device is not lower than a sixth threshold;
   quality of service of the load of the network device meets a seventh threshold; or
   a bandwidth requirement of the network device is not lower than an eighth threshold.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device;
the first parameter includes one or more of the following:
   a size of the load; a type of the load; a size of a cache; a type of the cache; a type of a service; or a quality of service indicator of the service.

FIG. 7 is a second schematic structural diagram of an apparatus for transmission processing according to an embodiment of the present application. The apparatus may be used in a terminal. As shown in FIG. 7, the apparatus includes:
a second determining unit 700, used for determining a transmission frequency domain for a network device; and
a second transmitting unit 710, used for performing a transmission operation between the terminal and the network device in the transmission frequency domain, where the transmission operation includes one or more of the following:
   data transmission; information transmission; or signal transmission.

In an embodiment, determining the transmission frequency domain for the network device includes:
receiving first information transmitted from the network device based on a first mode, where the first information is used for indicating the transmission frequency domain for the network device; and
determining the transmission frequency domain for the network device based on the first information;
the first mode includes one or more of the following:
   static or semi-static signaling transmission;
   dynamic signaling or signal transmission;
   media access control layer control element transmission; or
   timer-triggered transmission.

In an embodiment, determining the transmission frequency domain for the network device includes:
determining the transmission frequency domain for the network device based on frequency domain configuration information.

In an embodiment, determining the transmission frequency domain for the network device based on the frequency domain configuration information includes:
determining the transmission frequency domain for the network device based on the frequency domain configuration information on the network device side and/or the frequency domain configuration information on a terminal side.

In an embodiment, determining the transmission frequency domain for the network device based on the frequency domain configuration information on the network device side and/or the frequency domain configuration information on the terminal side includes:
determining the transmission frequency domain for the network device based on a first frequency domain;
the first frequency domain is a frequency domain indicated in the frequency domain configuration information on the network device side and/or the frequency domain configuration information on the terminal side.

In an embodiment, the first frequency domain includes one or more of the following:
a frequency domain used for data transmission; a frequency domain used for information transmission; or a frequency domain used for signal transmission.

In an embodiment, determining the transmission frequency domain for the network device based on the frequency domain configuration information on the network device side and/or the frequency domain configuration information on the terminal side includes:
determining the transmission frequency domain for the network device based on a second frequency domain and/or a third frequency domain indicated in the frequency domain configuration information on the network device side and/or the frequency domain configuration information on the terminal side.

In an embodiment, the second frequency domain includes one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
where the first condition includes one or more of the following:
   the load of the network device is not higher than a first threshold;
   a quantity and/or proportion of terminals attached to the network device is not higher than a second threshold;
   quality of service of the load of the network device meets a third threshold; or
   a bandwidth requirement for the network device is not higher than a fourth threshold.

In an embodiment, the third frequency domain includes one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition includes one or more of the following:
   the load of the network device is not lower than a fifth threshold;
   a quantity and/or proportion of terminals attached to the network device is not lower than a sixth threshold;
   quality of service of the load of the network device meets a seventh threshold; or
   a bandwidth requirement of the network device is not lower than an eighth threshold.

In an embodiment, determining the transmission frequency domain for the network device based on the frequency domain configuration information on the network device side and/or the frequency domain configuration information on the terminal side includes:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

In an embodiment, determining the transmission frequency domain for the network device based on the fourth frequency domain and/or the fifth frequency domain includes:
determining a bandwidth of the transmission frequency domain for the network device based on a sum of bandwidths of the fourth frequency domain and the fifth frequency domain.

In an embodiment, determining the transmission frequency domain for the network device based on the frequency domain configuration information on the network device side and/or the frequency domain configuration information on the terminal side includes:
determining the transmission frequency domain for the network device based on the frequency domain configuration information on the network device side and/or the frequency domain configuration information on the terminal side, as well as a first parameter used for representing a load of the network device;
the first parameter includes one or more of the following:
   a size of the load; a type of the load; a size of a cache; a type of the cache; a type of a service; or a quality of service indicator of the service.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash disk, a mobile hard disk, a read-only memory (ROM), a random access memory (RAM), a magnetic disk, or a compact disk.

It should be noted here that the above-mentioned apparatus provided by the embodiments of the present application may implement all the method steps implemented by the above method embodiments, and may achieve the same effect. The same parts and beneficial effects as the same method embodiments are not repeated herein.

An embodiment of the present application further provides a computer-readable storage medium storing a computer program, where the computer program causes a computer to perform the method for transmission processing provided in the above-mentioned embodiments.

It should be noted that the computer-readable storage medium provided in an embodiment of the present application may implement all the method steps implemented in the above method embodiments and achieve the same technical effects. The same parts and beneficial effects as the method embodiments in this embodiment are not specifically described herein.

The computer-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The technical solutions provided in an embodiment of the present application may be performed by various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

The network device and terminal device may each use one or more antennas for multi input multi output (MIMO) transmission. The MIMO transmission may be single user MIMO (SU-MIMO) or multiple user MIMO (MU-MIMO). Based on the form and quantity of antenna combinations, MIMO transmission may be 2D-MIMO, 3D-MIMO, FD-MIMO, or massive MIMO, as well as diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for transmission processing, performed by a network device, comprising:
determining a transmission frequency domain for the network device based on frequency domain configuration information; and
performing a transmission operation in the transmission frequency domain, wherein the transmission operation comprises one or more of the following:
data transmission; information transmission; or signal transmission.

2. The method of claim 1, wherein after determining the transmission frequency domain for the network device, the method further comprises:
transmitting first information based on a first mode, wherein the first information is used for indicating the transmission frequency domain; and
the first mode comprises one or more of the following:
static or semi-static signaling transmission;
dynamic signaling or signal transmission;
media access control layer control element transmission; or
timer-triggered transmission.

3. The method of claim 1, wherein determining the transmission frequency domain for the network device based on the frequency domain configuration information comprises:
determining the transmission frequency domain for the network device based on frequency domain configuration information on the network device side and/or frequency domain configuration information on a terminal side.

4. The method of claim 3, wherein determining the transmission frequency domain for the network device based on the frequency domain configuration information on the network device side and/or the frequency domain configuration information on the terminal side comprises:
determining the transmission frequency domain for the network device based on a first frequency domain;
the first frequency domain is a frequency domain indicated in the frequency domain configuration information on the network device side and/or the frequency domain configuration information on the terminal side.

5. The method of claim 4, wherein the first frequency domain comprises one or more of the following:
a frequency domain used for data transmission; a frequency domain used for information transmission; or a frequency domain used for signal transmission.

6. The method of claim 3, wherein determining the transmission frequency domain for the network device based on the frequency domain configuration information on the network device side and/or the frequency domain configuration information on the terminal side comprises:
determining the transmission frequency domain for the network device based on a second frequency domain and/or a third frequency domain indicated in the frequency domain configuration information on the network device side and/or the frequency domain configuration information on the terminal side.

7. The method of claim 6, wherein the second frequency domain comprises one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition comprises one or more of the following:
the load of the network device is not higher than a first threshold;
a quantity and/or proportion of terminals attached to the network device is not higher than a second threshold;
quality of service of the load of the network device meets a third threshold; or
a bandwidth requirement for the network device is not higher than a fourth threshold.

8. The method of claim 6, wherein the third frequency domain comprises one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition comprises one or more of the following:
the load of the network device is not lower than a fifth threshold;
a quantity and/or proportion of terminals attached to the network device is not lower than a sixth threshold;
quality of service of the load of the network device meets a seventh threshold; or
a bandwidth requirement of the network device is not lower than an eighth threshold.

9. The method of claim 3, wherein determining the transmission frequency domain for the network device based on the frequency domain configuration information on the network device side and/or the frequency domain configuration information on the terminal side comprises:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

10. The method of claim 9, wherein determining the transmission frequency domain for the network device based on the fourth frequency domain and/or the fifth frequency domain comprises:
determining a bandwidth of the transmission frequency domain for the network device based on a sum of bandwidths of the fourth frequency domain and the fifth frequency domain.

11. The method of claim 3, wherein determining the transmission frequency domain for the network device based on the frequency domain configuration information on the network device side and/or the frequency domain configuration information on the terminal side comprises:
determining the transmission frequency domain for the network device based on the frequency domain configuration information on the network device side and/or the frequency domain configuration information on the terminal side, as well as a first parameter used for characterizing a load of the network device;
the first parameter comprises one or more of the following:
a size of the load; a type of the load; a size of a cache; a type of the cache; a type of a service; or a quality of service indicator of the service.

12. A method for transmission processing, performed by a terminal, comprising:
determining a transmission frequency domain for a network device; and
performing a transmission operation between the terminal and the network device in the transmission frequency domain, wherein the transmission operation comprises one or more of the following:
data transmission; information transmission; or signal transmission.

13. The method of claim 12, wherein determining the transmission frequency domain for the network device comprises:
receiving first information transmitted from the network device based on a first mode, wherein the first information is used for indicating the transmission frequency domain for the network device; and
determining the transmission frequency domain for the network device based on the first information;
the first mode comprises one or more of the following:
static or semi-static signaling transmission;
dynamic signaling or signal transmission;
media access control layer control element transmission; or
timer-triggered transmission.

14. The method of claim 12, wherein determining the transmission frequency domain for the network device comprises:
determining the transmission frequency domain for the network device based on frequency domain configuration information.

15. The method of claim 14, wherein determining the transmission frequency domain for the network device based on the frequency domain configuration information comprises:
determining the transmission frequency domain for the network device based on the frequency domain configuration information on the network device side and/or the frequency domain configuration information on a terminal side.

16. The method of claim 15, wherein determining the transmission frequency domain for the network device based on the frequency domain configuration information on the network device side and/or the frequency domain configuration information on the terminal side comprises:
determining the transmission frequency domain for the network device based on a first frequency domain;
the first frequency domain is a frequency domain indicated in the frequency domain configuration information on the network device side and/or the frequency domain configuration information on the terminal side.

17. The method of claim 16, wherein the first frequency domain comprises one or more of the following:
a frequency domain used for data transmission; a frequency domain used for information transmission; or a frequency domain used for signal transmission.

18. The method of claim 15, wherein determining the transmission frequency domain for the network device based on the frequency domain configuration information on the network device side and/or the frequency domain configuration information on the terminal side comprises:
determining the transmission frequency domain for the network device based on a second frequency domain and/or a third frequency domain indicated in the frequency domain configuration information on the network device side and/or the frequency domain configuration information on the terminal side.

19. The method of claim 18, wherein the second frequency domain comprises one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition comprises one or more of the following:
the load of the network device is not higher than a first threshold;
a quantity and/or proportion of terminals attached to the network device is not higher than a second threshold;
quality of service of the load of the network device meets a third threshold; or
a bandwidth requirement for the network device is not higher than a fourth threshold.

20. The method of claim 18, wherein the third frequency domain comprises one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition comprises one or more of the following:
the load of the network device is not lower than a fifth threshold;
a quantity and/or proportion of terminals attached to the network device is not lower than a sixth threshold;
quality of service of the load of the network device meets a seventh threshold; or
a bandwidth requirement of the network device is not lower than an eighth threshold.

21. The method of claim 15, wherein determining the transmission frequency domain for the network device based on the frequency domain configuration information on the network device side and/or the frequency domain configuration information on the terminal side comprises:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

22. The method of claim 21, wherein determining the transmission frequency domain for the network device based on the fourth frequency domain and/or the fifth frequency domain comprises:
determining a bandwidth of the transmission frequency domain for the network device based on a sum of bandwidths of the fourth frequency domain and the fifth frequency domain.

23. The method of claim 15, wherein determining the transmission frequency domain for the network device based on the frequency domain configuration information on the network device side and/or the frequency domain configuration information on the terminal side comprises:
determining the transmission frequency domain for the network device based on the frequency domain configuration information on the network device side and/or the frequency domain configuration information on the terminal side, as well as a first parameter used for characterizing a load of the network device;
the first parameter comprises one or more of the following:
a size of the load; a type of the load; a size of a cache; a type of the cache; a type of a service; or a quality of service indicator of the service.

24. A network device, comprising a memory, a transceiver, and a processor;
the memory is used for storing a computer program; the transceiver is used for transmitting and receiving data under control of the processor; the processor is used for reading the computer program in the memory and performing the following operations:
determining a transmission frequency domain for the network device based on frequency domain configuration information; and
performing a transmission operation in the transmission frequency domain, wherein the transmission operation comprises one or more of the following:
data transmission; information transmission; or signal transmission.

25. The network device of claim 24, wherein after determining the transmission frequency domain for the network device, the operation further comprises:
transmitting first information based on a first mode, wherein the first information is used for indicating the transmission frequency domain;
the first mode comprises one or more of the following:
static or semi-static signaling transmission;
dynamic signaling or signal transmission;
media access control layer control element transmission; or
timer-triggered transmission.

26. The network device of claim 24, wherein determining the transmission frequency domain for the network device based on the frequency domain configuration information comprises:
determining the transmission frequency domain for the network device based on the frequency domain configuration information on the network device side and/or the frequency domain configuration information on a terminal side.

27. The network device of claim 26, wherein determining the transmission frequency domain for the network device based on the frequency domain configuration information on the network device side and/or the frequency domain configuration information on the terminal side comprises:
determining the transmission frequency domain for the network device based on a first frequency domain;
the first frequency domain is a frequency domain indicated in the frequency domain configuration information on the network device side and/or the frequency domain configuration information on the terminal side.

28. The network device of claim 27, wherein the first frequency domain comprises one or more of the following:
a frequency domain used for data transmission; a frequency domain used for information transmission; or a frequency domain used for signal transmission.

29. The network device of claim 26, wherein determining the transmission frequency domain for the network device based on the frequency domain configuration information on the network device side and/or the frequency domain configuration information on the terminal side comprises:
determining the transmission frequency domain for the network device based on a second frequency domain and/or a third frequency domain indicated in the frequency domain configuration information on the network device side and/or the frequency domain configuration information on the terminal side.

30. The network device of claim 29, wherein the second frequency domain comprises one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition comprises one or more of the following:
the load of the network device is not higher than a first threshold;
a quantity and/or proportion of terminals attached to the network device is not higher than a second threshold;
quality of service of the load of the network device meets a third threshold; or
a bandwidth requirement for the network device is not higher than a fourth threshold.

31. The network device of claim 29, wherein the third frequency domain comprises one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition comprises one or more of the following:
the load of the network device is not lower than a fifth threshold;
a quantity and/or proportion of terminals attached to the network device is not lower than a sixth threshold;
quality of service of the load of the network device meets a seventh threshold; or
a bandwidth requirement of the network device is not lower than an eighth threshold.

32. The network device of claim 26, wherein determining the transmission frequency domain for the network device based on the frequency domain configuration information on the network device side and/or the frequency domain configuration information on the terminal side comprises:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

33. The network device of claim 32, wherein determining the transmission frequency domain for the network device based on the fourth frequency domain and/or the fifth frequency domain comprises:
determining a bandwidth of the transmission frequency domain for the network device based on a sum of bandwidths of the fourth frequency domain and the fifth frequency domain.

34. The network device of claim 26, wherein determining the transmission frequency domain for the network device based on the frequency domain configuration information on the network device side and/or the frequency domain configuration information on the terminal side comprises:
determining the transmission frequency domain for the network device based on the frequency domain configuration information on the network device side and/or the frequency domain configuration information on the terminal side, as well as a first parameter used for characterizing a load of the network device;
the first parameter comprises one or more of the following:
a size of the load; a type of the load; a size of a cache; a type of the cache; a type of a service; or a quality of service indicator of the service.

35. A terminal, comprising a memory, a transceiver, and a processor;
the memory is used for storing a computer program; the transceiver is used for transmitting and receiving data under control of the processor; the processor is used for reading the computer program in the memory and performing the following operations:
determining a transmission frequency domain for a network device; and
performing a transmission operation between the terminal and the network device in the transmission frequency domain, wherein the transmission operation comprises one or more of the following:
data transmission; information transmission; or signal transmission.

36. The terminal of claim 35, wherein determining the transmission frequency domain for the network device comprises:
receiving first information transmitted from the network device based on a first mode, wherein the first information is used for indicating the transmission frequency domain for the network device; and
determining the transmission frequency domain for the network device based on the first information;
the first mode comprises one or more of the following:
static or semi-static signaling transmission;
dynamic signaling or signal transmission;
media access control layer control element transmission; or
timer-triggered transmission.

37. The terminal of claim 35, wherein determining the transmission frequency domain for the network device comprises:
determining the transmission frequency domain for the network device based on frequency domain configuration information.

38. The terminal of claim 37, wherein determining the transmission frequency domain for the network device based on the frequency domain configuration information comprises:
determining the transmission frequency domain for the network device based on the frequency domain configuration information on the network device side and/or the frequency domain configuration information on a terminal side.

39. The terminal of claim 38, wherein determining the transmission frequency domain for the network device based on the frequency domain configuration information on the network device side and/or the frequency domain configuration information on the terminal side comprises:
determining the transmission frequency domain for the network device based on a first frequency domain;
the first frequency domain is a frequency domain indicated in the frequency domain configuration information on the network device side and/or the frequency domain configuration information on the terminal side.

40. The terminal of claim 39, wherein the first frequency domain comprises one or more of the following:
a frequency domain used for data transmission; a frequency domain used for information transmission; or a frequency domain used for signal transmission.

41. The terminal of claim 38, wherein determining the transmission frequency domain for the network device based on the frequency domain configuration information on the network device side and/or the frequency domain configuration information on the terminal side comprises:
determining the transmission frequency domain for the network device based on a second frequency domain and/or a third frequency domain indicated in the frequency domain configuration information on the network device side and/or the frequency domain configuration information on the terminal side.

42. The terminal of claim 41, wherein the second frequency domain comprises one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition comprises one or more of the following:
the load of the network device is not higher than a first threshold;
a quantity and/or proportion of terminals attached to the network device is not higher than a second threshold;
quality of service of the load of the network device meets a third threshold; or
a bandwidth requirement for the network device is not higher than a fourth threshold.

43. The terminal of claim 41, wherein the third frequency domain comprises one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition comprises one or more of the following:
the load of the network device is not lower than a fifth threshold;
a quantity and/or proportion of terminals attached to the network device is not lower than a sixth threshold;
quality of service of the load of the network device meets a seventh threshold; or
a bandwidth requirement of the network device is not lower than an eighth threshold.

44. The terminal of claim 38, wherein determining the transmission frequency domain for the network device based on the frequency domain configuration information on the network device side and/or the frequency domain configuration information on the terminal side comprises:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

45. The terminal of claim 44, wherein determining the transmission frequency domain for the network device based on the fourth frequency domain and/or the fifth frequency domain comprises:
determining a bandwidth of the transmission frequency domain for the network device based on a sum of bandwidths of the fourth frequency domain and the fifth frequency domain.

46. The terminal of claim 38, wherein determining the transmission frequency domain for the network device based on the frequency domain configuration information on the network device side and/or the frequency domain configuration information on the terminal side comprises:
determining the transmission frequency domain for the network device based on the frequency domain configuration information on the network device side and/or the frequency domain configuration information on the terminal side, as well as a first parameter used for characterizing a load of the network device;
the first parameter comprises one or more of the following:
a size of the load; a type of the load; a size of a cache; a type of the cache; a type of a service; or a quality of service indicator of the service.

47. An apparatus for transmission processing, used in a network device, comprising:
a first determining unit, used for determining a transmission frequency domain for the network device based on frequency domain configuration information; and
a first transmitting unit, used for performing a transmission operation in the transmission frequency domain, wherein the transmission operation comprises one or more of the following:
data transmission; information transmission; or signal transmission.

48. The apparatus of claim 47, wherein the apparatus further comprises:
a transmitting unit, used for transmitting first information based on a first mode, wherein the first information is used for indicating the transmission frequency domain;
the first mode comprises one or more of the following:
static or semi-static signaling transmission;
dynamic signaling or signal transmission;
media access control layer control element transmission; or
timer-triggered transmission.

49. The apparatus of claim 47, wherein determining the transmission frequency domain for the network device based on the frequency domain configuration information comprises:
determining the transmission frequency domain for the network device based on the frequency domain configuration information on the network device side and/or the frequency domain configuration information on a terminal side.

50. The apparatus of claim 49, wherein determining the transmission frequency domain for the network device based on the frequency domain configuration information on the network device side and/or the frequency domain configuration information on the terminal side comprises:
determining the transmission frequency domain for the network device based on a first frequency domain;
the first frequency domain is a frequency domain indicated in the frequency domain configuration information on the network device side and/or the frequency domain configuration information on the terminal side.

51. The apparatus of claim 50, wherein the first frequency domain comprises one or more of the following:
a frequency domain used for data transmission; a frequency domain used for information transmission; or a frequency domain used for signal transmission.

52. The apparatus of claim 49, wherein determining the transmission frequency domain for the network device based on the frequency domain configuration information on the network device side and/or the frequency domain configuration information on the terminal side comprises:
determining the transmission frequency domain for the network device based on a second frequency domain and/or a third frequency domain indicated in the frequency domain configuration information on the network device side and/or the frequency domain configuration information on the terminal side.

53. The apparatus of claim 52, wherein the second frequency domain comprises one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition comprises one or more of the following:
the load of the network device is not higher than a first threshold;
a quantity and/or proportion of terminals attached to the network device is not higher than a second threshold;
quality of service of the load of the network device meets a third threshold; or
a bandwidth requirement for the network device is not higher than a fourth threshold.

54. The apparatus of claim 52, wherein the third frequency domain comprises one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition comprises one or more of the following:
the load of the network device is not lower than a fifth threshold;
a quantity and/or proportion of terminals attached to the network device is not lower than a sixth threshold;
quality of service of the load of the network device meets a seventh threshold; or
a bandwidth requirement of the network device is not lower than an eighth threshold.

55. The apparatus of claim 49, wherein determining the transmission frequency domain for the network device based on the frequency domain configuration information on the network device side and/or the frequency domain configuration information on the terminal side comprises:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

56. The apparatus of claim 55, wherein determining the transmission frequency domain for the network device based on the fourth frequency domain and/or the fifth frequency domain comprises:
determining a bandwidth of the transmission frequency domain for the network device based on a sum of bandwidths of the fourth frequency domain and the fifth frequency domain.

57. The apparatus of claim 49, wherein determining the transmission frequency domain for the network device based on the frequency domain configuration information on the network device side and/or the frequency domain configuration information on the terminal side comprises:
determining the transmission frequency domain for the network device based on the frequency domain configuration information on the network device side and/or the frequency domain configuration information on the terminal side, as well as a first parameter used for characterizing a load of the network device;
the first parameter comprises one or more of the following:
a size of the load; a type of the load; a size of a cache; a type of the cache; a type of a service; or a quality of service indicator of the service.

58. An apparatus for transmission processing, used in a terminal, comprising:
a second determining unit, used for determining a transmission frequency domain for a network device; and
a second transmitting unit, used for performing a transmission operation between the terminal and the network device in the transmission frequency domain, wherein the transmission operation comprises one or more of the following:
data transmission; information transmission; or signal transmission.

59. The apparatus of claim 58, wherein determining the transmission frequency domain for the network device comprises:
receiving first information transmitted from the network device based on a first mode, wherein the first information is used for indicating the transmission frequency domain for the network device; and
determining the transmission frequency domain for the network device based on the first information;
the first mode comprises one or more of the following:
static or semi-static signaling transmission;
dynamic signaling or signal transmission;
media access control layer control element transmission; or
timer-triggered transmission.

60. The apparatus of claim 58, wherein determining the transmission frequency domain for the network device comprises:
determining the transmission frequency domain for the network device based on frequency domain configuration information.

61. The apparatus of claim 60, wherein determining the transmission frequency domain for the network device based on the frequency domain configuration information comprises:
determining the transmission frequency domain for the network device based on the frequency domain configuration information on the network device side and/or the frequency domain configuration information on a terminal side.

62. The apparatus of claim 61, wherein determining the transmission frequency domain for the network device based on the frequency domain configuration information on the network device side and/or the frequency domain configuration information on the terminal side comprises:
determining the transmission frequency domain for the network device based on a first frequency domain;
the first frequency domain is a frequency domain indicated in the frequency domain configuration information on the network device side and/or the frequency domain configuration information on the terminal side.

63. The apparatus of claim 62, wherein the first frequency domain comprises one or more of the following:
a frequency domain used for data transmission; a frequency domain used for information transmission; or a frequency domain used for signal transmission.

64. The apparatus of claim 61, wherein determining the transmission frequency domain for the network device based on the frequency domain configuration information on the network device side and/or the frequency domain configuration information on the terminal side comprises:
determining the transmission frequency domain for the network device based on a second frequency domain and/or a third frequency domain indicated in the frequency domain configuration information on the network device side and/or the frequency domain configuration information on the terminal side.

65. The apparatus of claim 64, wherein the second frequency domain comprises one or more of the following:
a frequency domain used for information transmission and/or signal transmission for the network device in a power-saving state;
a minimum frequency domain used for transmission;
a frequency domain used for information transmission at a cell level;
a frequency domain used for information transmission for a UE-group; or
a frequency domain used for data transmission in case that a load of the network device meets a first condition;
the first condition comprises one or more of the following:
the load of the network device is not higher than a first threshold;
a quantity and/or proportion of terminals attached to the network device is not higher than a second threshold;
quality of service of the load of the network device meets a third threshold; or
a bandwidth requirement for the network device is not higher than a fourth threshold.

66. The apparatus of claim 64, wherein the third frequency domain comprises one or more of the following:
a frequency domain used for data transmission;
a frequency domain used for UE-specific information transmission;
a frequency domain used for information transmission for a UE-group; or
a frequency domain used for data transmission in case that the load of the network device meets a second condition;
the second condition comprises one or more of the following:
the load of the network device is not lower than a fifth threshold;
a quantity and/or proportion of terminals attached to the network device is not lower than a sixth threshold;
quality of service of the load of the network device meets a seventh threshold; or
a bandwidth requirement of the network device is not lower than an eighth threshold.

67. The apparatus of claim 61, wherein determining the transmission frequency domain for the network device based on the frequency domain configuration information on the network device side and/or the frequency domain configuration information on the terminal side comprises:
determining the transmission frequency domain for the network device based on a fourth frequency domain and/or a fifth frequency domain;
the fourth frequency domain is a frequency domain indicated in the frequency domain configuration information on the network device side, or a frequency domain determined based on the frequency domain indicated in the frequency domain configuration information on the network device side; and
the fifth frequency domain is a frequency domain indicated in the frequency domain configuration information on the terminal side, or a frequency domain determined based on the frequency domain indicated in the frequency domain configuration information on the terminal side.

68. The apparatus of claim 67, wherein determining the transmission frequency domain for the network device based on the fourth frequency domain and/or the fifth frequency domain comprises:
determining a bandwidth of the transmission frequency domain for the network device based on a sum of bandwidths of the fourth frequency domain and the fifth frequency domain.

69. The apparatus of claim 61, wherein determining the transmission frequency domain for the network device based on the frequency domain configuration information on the network device side and/or the frequency domain configuration information on the terminal side comprises:
determining the transmission frequency domain for the network device based on the frequency domain configuration information on the network device side and/or the frequency domain configuration information on the terminal side, as well as a first parameter used for characterizing a load of the network device;
the first parameter comprises one or more of the following:
a size of the load; a type of the load; a size of a cache; a type of the cache; a type of a service; or a quality of service indicator of the service.

70. A computer-readable storage medium, wherein the computer-readable storage medium stores a computer program, and the computer program is used for causing a computer to perform the method of any of claims 1 to 11, or to perform the method of any of claims 12 to 23.
